# EUROPEAN PATENT APPLICATION

(11) **EP 2 793 043 A1**
(43) Date of publication of application: **22.10.2014**
(21) Application number: 13002048.0
(22) Date of filing: 18.04.2013
(51) Int. Cl.: G01S 3/808, G01S 11/14, G01S 13/86

(54) **Determination of weapon locations and projectile trajectories by using automatic and hybrid processing of acoustic and electromagnetic detections**

(71) Applicant: Airbus Defence and Space GmbH, 85521 Ottobrunn (DE); Snipos AS, 3176 Undrumsdal (NO)
(72) Inventor: Bank, Dirk, Dr., 89584 Lauterach (DE); Gustavsen, Arve Gleissner, 3178 Vale (NO); Otterlei, Ragnvald, 3600 Kongsberg (NO)
(74) Representative: Meel, Thomas

(57) **Abstract**

The invention relates to a method (1, 101, 201, 301, 401, 501, 601) for monitoring a flying projectile (85, 86)
utilizing at least two sub-systems (10, 20, 110, 120),
one sub-system being an acoustic sub-system (10, 110)
and one sub-system being a radar sub-system (20, 120),
and at least two data processing units (30, 130, 33, 37, 40, 41, 140),
an acoustic data processing unit (30, 130) capable of processing data (31) sensed by the acoustic sub-system (10, 110), all of them called acoustic signals (91, 191, 192, 291, 391, 92, 94; 93, 194), and
a radar data processing unit (33) capable of processing data (34) sensed by the radar sub-system (20, 120), all of them called radar signals (95, 96).

According to the invention in the data processing units (30, 130, 33, 37, 40, 41, 140) at least two of the following data are processed:
an acoustic signal (91, 191, 192, 291, 391; 92, 94; 93, 194) representing a muzzle blast wave from a muzzle (84), named muzzle blast wave signal (92, 94),
an acoustic signal (91, 191, 192, 291, 391) representing a shock wave of a projectile (85, 86), named shock wave signal (93, 194), and
a radar signal (95, 96) representing at least two radar detections (97, 98, 99) by which a location of a firing weapon (82, 83, 84, R^{XYZ}, R^{XYZ}ₐ, R^{XYZ2}) of the projectile (85, 86) is retraced.

A hybrid sensor system (2, 102, 4) for monitoring a flying projectile (85, 86), in particular by means of the above-described method, (1, 101, 201, 301, 401, 501, 601) for monitoring the flying projectile (85, 86) is another object of the invention.

## Description

The field of this invention relates to the detection of weapons and projectiles when used e.g. in battles, during peace keeping operations, or for security purposes. There is an urgent need for those attacked by weapons to estimate the direction to and the position of aggressive weapons in order to seek immediate protection against the projectiles from these weapons or to react with counter-measures. Additionally, it is of importance to provide a sufficient amount of accurate information about the weapons in order to have them removed and to restore the peace at a minimum of human harm. A method is described, which is designed to provide such information with good accuracy. The processes are preferably carried out in a sensor system, which combines a number of specially described detection features. The system can also be operated from a group of vehicles like a convoy.

### Background art

A majority of weapons are firing projectiles with a deterministic flight path using conventional technologies for aiming at a target. For the purpose of estimating the position of a weapon several sensor technologies can be applied, like different methods for optical detection, and combined with automatic data processing.

The weapon localization systems described in Patent US 6,621,764 B1 (inventor: Thomas Smith; filing date: 20.02.2001) uses acoustical and optical detection means like a camera. Information about a weapon fire is obtained at different frequencies. A sensor fusion processor is used for determining whether the weapon locations obtained by the respective detection means match. Calculations are made only along the direct line between the weapon and the sensor using a first acoustical sound frequency of the firing weapon. After combination of acoustical and optical sensor data within a detection sub-system, the fused information is then used to cue one or more optical tracking sub-system like mm-wave radar, laser radar, video camera, infrared camera or micro-bolometer. The processing in the tracking sub-system is performed in a strictly successive manner for the respective sensor type and individual results from the tracking sub-systems are processed by a tracking fusion processor. In this way predictions about possible future positions of the ammunitions are obtained.

Patent US 6,839,025 B1 (Inventor: Ken Reigle; filing date: 02.06.2003) provides special methods and systems for direction finding in sensing systems in order to forecast an objects future location. This includes systems such as active radar, passive radar, bi-static radar, active sonar, passive sonar, and passive coherent location. The sensing systems utilize sensor data such as electromagnetic energy, acoustic energy, seismic energy, magnetic energy, and infrared energy. The description emphasizes the use of an interferometric technique and an amplitude direction finding technique. The information from different sensing systems can be used to guide a second object in respect to the predicted course or location of the first objet.

Patent US 7,123,548 B1 (Inventor: Charles A. Uzes; filing date: 09.08.2005) and Patent US 7,394,724 B1 (Inventor: Charles A. Uzes; filing date: 02.08.2007) describe a system applicable to acoustic, seismic, electromagnetic, hydrodynamic, and shock waves. The patents incorporate the utilization of electromagnetic and acoustic arrays e.g. to locate snipers, birds, or severe storm phenomena. The focus of the patents is on the analysis of physical wave propagation in terms of solutions of scalar and vector field wave equations in a certain material medium. Such wave fields are determined by deployment of a certain type of transducers like antennas for electromagnetic waves or microphones for acoustic waves for measurements over a time interval. The system can also make use of digitized contour maps of the environment.

An optical gunfire detection system is disclosed in Patent US 7,409,899 B1 (Assignee: The United States of America as represented by the Secretary of Army; filing date: 26.11.2004). The system comprises an image-capturing device operable for detecting light and a computer implemented mechanism for storage of images or videos and detection of specific locations and classifications of gunfire in images. The system further comprises an acoustic device for verifying the classifications of the gunfire, a position laser or laser designator for identifying the locations of the gunfire, and a defence mechanism comprising the laser designator that is operable to defend against a source of the gunfire. A runtime difference between a muzzle blast wave sound and an optical muzzle flash is evaluated for an estimate of a distance.

A system and a method for determining the three-dimensional location of an acoustic event using a two dimensional array of at least five sound sensors is disclosed in patent application WO 2006/036482 A2 (Applicant: BMH Associates Inc; priority dates 08.09.2004, 07.09.2005). Other non-integrated means for determining sensor position may also be employed. Radar or optical positioning systems and mobile sensing elements may be associated with a respective system for determining position. The description mainly addresses the problem of synchronization of acoustic detection time scales between the number of sensors and localization of acoustic events.

Patent Application US 2008/291 075 A1 (Inventor: John Rapanotti; filing date: 25.05.2007) describes a defensive aids suite for light armoured vehicles utilizing four complementary sensor technologies including visible and infrared optics, radar, acoustics, as well as both laser and millimetre wave detection. Short range search and track radar is used with explosive of fragmentation grenades selected and launched to intercept and defeat the threat. Acoustic threat detection increases robustness and extends the detection range to include small calibre threats. Detection of active targeting systems by laser and radar warning receivers provides cueing information for targeting optics and fire control systems. While radar and acoustics are both incorporated in the defensive aids suite, the two sensor technologies are employed in an individual manner.

An acoustic listening sub-system may function as described in the patent NO 307 013 B (Assignee: Gustavsen Arve, Endresen Tore, Otterlei Ragnvald; filing date: 26. 09. 1995; see also US 5 912 862 A, EP 0 855 040 B1) for the detection of one or more snipers using a minimum of two microphones.

A common aspect of the above mentioned systems is the use of one or several sensor systems in order to obtain a set of data on a projectile fired from some place in the vicinity of a sensor system. By doing so, the disclosures fail to utilize the full potential of a sensor system which results in a lower accuracy of the obtained data. The component and the system performance need to be improved in order to extend the area of operation and in particular reduce the danger for non-combatants in an area of counteractive measures.

### Difficulties known from prior art

Each sensor technology has some well known limitations. Limitations may be caused by range restrictions or technical restrictions in tracking speed. Other disturbances are caused by climatic and other environmental conditions. In addition, obstructions in the weapon signature or deformations in the projectile signature may occur. All detection methods are suffering from environmental and electrical noise. The environmental noise may be split into noise from variable wind or rain and other sources of noise (e.g. from vehicles, helicopters, people, or distant shots), which may superimpose or even cancel the sounds of interest. All these noises will for example reduce the detection range for the microphones. Limitation in any individual sensor capability means that direction and position information is obtained with some uncertainty.

Threats are eminent when projectiles pass in dangerous distances, where in particular inaccuracies may occur due to the speed of the projectile since the acoustic signature of projectiles flying with subsonic speed can only be recorded inaccurately. Additional problems are due to weapons with silencers and detections at long distances represent challenges for the acoustic technology, whereas small sizes of calibre or a high projectile speed, poor visibility e.g. due to stealth technology or a limited detection range may also pose a problem for some optical detection technologies.

It is therefore essential to identify a method that helps to overcome such problems. Especially, it is desired to operate such a method in a sensor system with improved abilities.

### Description of the invention

The present invention is aiming to overcome limitations of the state of the art regarding the problem of monitoring a flying projectile with good accuracy. A method in accordance with claim 1 helps to overcome said shortages. By claim 21, a hybrid sensor system is provided, in which especially before-named method can be implemented. The present teaching can be realized by a monitoring vehicle in accordance with claim 24.

By one aspect this invention is meant to provide information in an integrated solution with sensor sub-systems that may compensate for individual sensor failures. Certain parameters obtained with one sub-system may be used in the processing of signals or data of a second sub-system.

A method for performance enhancement in monitoring a flying object, like a bullet or a shell, uses an acoustic sub-system and a radar sub-system. The moving object can be a flying projectile. When a moving object is monitored, at least one sensor system, preferably two sensor systems are used for monitoring. At least one position, preferably a sequence of positions of the object is evaluated. By monitoring the flying projectile, information on the projectile is obtained. Information on the projectile is obtained in a monitoring process by sending some information towards the projectile and collecting some information sent back from the projectile as a response. A path of the projectile is followed, preferably in two directions in time, e.g. referring to history and future. Dimensions, like a length, of the projectile are measured. The projectile is also monitored by its noise, meaning the sound emanating from the projectile. Monitoring is carried out automatically or at least semi-automatically. The monitored object is brought to the attention of an operator, at least by means of an automatic initiation of some automatically controlled counter-action. In a semi-automatic monitoring method, the operator is providing command inputs to the operating unit system, like a hybrid sensor system for monitoring a flying projectile. Command inputs may include a selection or a range of spatial angles, on which the monitoring is focussed, so that the monitoring method is performed with a higher speed or precision as compared to preset surveillance parameters.

Projectiles can move through air with subsonic speed. Projectiles flying with supersonic speed can be detected particularly well by signature of acoustic sound. Acoustic sound is propagating in air with well determined speed, the so called sonic velocity or velocity of sound as a modulation of air pressure. Expulsion of air by a flying projectile may generate a pressure gradient, which thus can form an acoustic signal. An acoustic signal is travelling through air from a source like a projectile or a blast event e.g. towards a detector, which can also be called the sensor for the signal. An acoustic sensor is a part of an acoustic sub-system. A sensor is selective with the detection of a specific type of signal. Either an acoustic signal or an electromagnetic signal is just detected by a respective sensor. An acoustic sensor, like a microphone, transforms an acoustic pressure gradient into an electronic signal. The meaning of signal is basically equivalent to the meaning of data. The expression "signal" emphasizes original information and an original form of propagation, whereas the expression "data" emphasizes the aspect of information and transformation of information.

Projectiles flying with supersonic speed or with lower speed like subsonic speed can be detected by signature of a radar echo. A signal detected by a radar sub-system can be characterized equivalently as radar data. The signal is propagating as an electromagnetic wave with a velocity, which is also called the velocity of light in air. The propagation direction is determined by interaction with reflective objects like projectiles, in particular object surfaces participate in this interaction. The interaction of an electromagnetic wave with a projectile transforms the electromagnetic wave so that the transformed electromagnetic wave carries on information about the projectile in a determined direction. In the interaction process a new electromagnetic wave can be generated, which can also carry on information about the projectile e.g. as amplitude information or frequency information, which is in particular different from amplitude and frequency of an electromagnetic wave sent out from the radar sub-system in advance especially towards the projectile. The generated electromagnetic wave is propagating from the projectile in a spatial direction. The spatial direction of propagation includes a direction towards a radar sensor of the radar sub-system, which can be a radar antenna. A radar antenna can comprise a number of antenna elements. A flying projectile therefore contributes a radar echo to the signal detected by the antenna.

The monitoring method also comprises at least two data processing units. A data processing unit can be a standard CPU component with some periphery components for storage of especially digital data, containing information from e.g. acoustic signals or radar signals. Other periphery components may be power supply units and input/output systems for data management. Electronically interconnected components of a processing unit can be integrated as computer hardware. In addition, a data processing unit is equipped with computer software, meaning command routines and procedures for parallel or sequential processing of data, typically in digitalized form. Data processing is also performed with data in so called analogue electronic form e.g. for transformation of a signal voltage or a frequency preferably within the acoustic sub-system or the radar sub-system. For example, comparison of signals from at least two microphones or comparison of signals from at least two antenna elements can be carried out in analogue electronic circuits. Comparison of signals can also be carried out after transformation of signals into digital data. The sensor data are transferred through electronic wiring, which connects the sub-systems like the radar or acoustic sub-system with a data processing unit. In system cases or network cases, where distances between the sub-systems and the processing units are particularly long, a significant risk of cable break can be anticipated, so that data are preferably exchanged with a transceiver system.

Data are transferred from the acoustic sub-system to a data processing unit. This acoustic data processing unit is capable of processing acoustic data, in particular by means of programmed processing routines. Data sensed by the acoustic sub-system enter e.g. through an interface into programmed processing routines. In the programmed processing routines, information from acoustic data is extracted, transformed, or combined in one or several steps. Data are also transferred from the radar sub-system to a data processing unit. The radar data processing unit is capable of processing radar data received from the radar sub-system.

A method according to this invention, which involves processing of data, in particular using a fusion process, may contribute to the improvement of an acoustic listening sub-system. This can be achieved by processing data in the data processing unit, whereby at least two signals from sensing sub-systems are used. A signal can be a muzzle blast wave signal, a shock wave signal, or a radar signal. A fusion process is by one aspect a process in which output data are generated from in-put data provided by two different sub-systems. The process is carried out in a processing unit. Data fusion is carried out in data processing, when data of a similar type have been calculated from acoustic measurements and from radar measurements. Accuracy of data is improved when data fusion is carried out in an early stage, named hybrid pre-fusion, during the calculation or measurement of acoustic data in particular by using radar data for controlling acoustic sensors and/or for acoustic data processing. Therefore data fusion is carried out in a data fusion process, in particular a hybrid data fusion process and also in a pre-fusion process like hybrid pre-fusion. The term hybrid means, that data from two different sub-systems are used, in particular at least one sub-system for radar technologies and at least one sub-system for acoustic technologies for measurements.

Firing a projectile produces a muzzle blast wave sound from a weapon. This event typically involves a muzzle blast wave due to an explosive expansion of gases in a weapon towards a weapon muzzle, which is accelerating the projectile to an initial speed. The gas expansion is accompanied with a pressure gradient, which propagates as an acoustic signal from the muzzle. Therefore this acoustic signal is named a muzzle blast wave signal or a muzzle pulse. A muzzle blast wave signal can be measured with an acoustic sub-system. A muzzle blast wave signal is specific for a type of ammunition. The acoustic signal is carrying information about the calibre of the weapon. Sensing the muzzle blast wave signal is particularly useful when a projectile is fired with subsonic velocity, which means that no shock wave, which can also be named shock pulse, exists right from the start. A similar situation occurs when the projectile speed decreases below the velocity of sound, which means that the shock wave of the projectile disappears, and no shock wave signal reaches the sensor of the acoustic sub-system.

A shock wave or shock wave signal is described in the literature e.g. in the context of aviation. A shock wave is an acoustic phenomenon occurring with an object that is flying with a velocity faster than the velocity of sound. The effect of formation of a shock wave is due to the deformation of the acoustic wave generated by the flying projectile, which takes a specific conical shape once the object is faster than the velocity of sound. The flying object is forming the tip of the cone. The surface of the cone is the wave-front of the shock wave signal. The cone represents information on the position, speed, and direction of the projectile.

A method according to this invention can also exploit the shock wave created by the projectile. This is particularly useful, when the distance between the weapon and the acoustic sub-system is too large in order to detect the muzzle blast wave signal from the weapon, or when disturbances like fog, rain, snow, wind, or sound ducting limit the detection capabilities over any distance. Also when a sound suppressor is used, a flying projectile can be monitored with the shock wave within an acoustic signal.

Furthermore, a monitoring method of this invention is extending the field of operation for the acoustic sub-system by using the radar detections of the radar sub-system. The radar sub-system typically records a number of detections, which can be attributed in sequence to one flying projectile. Especially useful for the precision of this method is a sequence of at least two radar detections. The precision can be further improved by using more detections. A detection of a projectile represents a position of a projectile in space. The position is measured by the runtime of the wave from a transmitter to a receiver and the resolution of an incoming angle of the detected wave, in particular when this wave is recorded by the sensor of the radar sub-system as an echo-like reflection from the projectile. The sequence of detections can be indexed representing a series of radar monitoring events from the projectile.

The processing of the data of the at least two sub-systems determines a location of a firing weapon of the projectile. When the location of the firing weapon is determined based on acoustic signals, an iterative calculation process is applied by the acoustic sub-system or by the acoustic data processing unit to the acoustic data. Using the radar sub-system can improve the accuracy of the determination of the weapon position in addition by providing the trajectory and the speed of the projectile from direct calculation to the acoustic sub-system. In this way, the calculation of the weapon position from acoustic signals is facilitated which is in contrast to the iterative calculation without available information from the radar sub-system. The computational accuracy and speed is significantly improved leading to a better result for the position of the firing weapon.

Threats are eminent when projectiles pass in dangerous distances. In monitoring situations, projectiles flying with supersonic speed can be detected acoustically as well as electromagnetically, while projectiles flying with subsonic speed may only be detected electromagnetically.

A method for monitoring a flying projectile has advantages. The advantages regard to accuracy of the calculated data on a firing action. The method of monitoring is preferably using detection systems that combine a number of additional sub-systems e.g. for confirmation about the surroundings like surveillance cameras, preferably cameras using wide angle detection of light or detectors for terahertz radiation or similar detection systems, preferably systems suitable for discovering hidden weapons. The method can also be applied with airborne monitoring systems e.g. carried by a helicopter or an unmanned aerial vehicle, or monitoring systems mounted on a floating vessel like a ship or sea mark, or a day mark. One advantage of this method is that it is independent from the presence of daylight or visibility.

A system that is technically capable of carrying out a monitoring method by combining a plurality of different sensor technologies can be called a hybrid sensor system, in particular, when the different sensor systems provide some equivalent information and some complementary information on an object that is monitored with the hybrid sensor system. Equivalent information is a type of information that can be obtained by different sensor sub-systems, whereas complementary information can only be obtained by one sensor sub-system but not by a second sensor sub-system. One advantage of a hybrid sensor system is the applicability for data fusion, which distinguishes the hybrid sensor system from a parallel sensor system using simply the information from a number of similar sensors to determine data like a trajectory with improved statistical precision or different parameters without combining data from different types of sensors in order to calculate data like a position of a weapon.

The radar sub-system can be realized as a Doppler-Radar, a Pulse-Doppler-Radar, a CW-Radar, a FMCW-Radar, a Bistatic Radar, or a Passive Radar. The radar sub-system of the hybrid sensor system comprises at least one receiver antenna and preferably at least one transmitter antenna. The transmitter antenna and the receiver antenna can also be built more compact by using at least one common transceiver antenna element for transmitting and receiving radar signals, whereby both actions are separated in time. The spatial resolution can be further improved by using one array or more arrays of antenna elements. The radar sub-system is provided with a data transfer connection to a radar data processing unit. In this processing unit, which can be a battery powered mobile computer system, sensor data received through the antenna by the radar sub-system are stored, e.g. in a binary code as electronic or magnetic data. In addition, the data processing unit has stored process commands for processing e.g. radar-sensor data and acoustic sensor data. Acoustic sensor data can also be available in the radar processing unit, in particular in hybrid sensor systems comprising a connection for bidirectional data transfer from an acoustic sub-system to the radar data processing unit.

Furthermore a hybrid sensor system comprises an acoustic sub-system. One component of the acoustic sub-system is an acoustic sensor system. The acoustic sensor system works with at least one microphone, preferably at least one array of microphones which comprises at least two microphones, more preferably at least three microphones. The acoustic sensor system can comprise at least two groups of microphones, a first group comprising at least one microphone and a second group comprising at least two, preferably four microphones. The groups of microphones can have the same number of microphones, like three or four microphones in each group. A group of microphones can also comprise ten microphones thus increasing the spatial resolution with the number of microphones, while optimisation of the effort for calculation of precise acoustic data is considered. All microphones are in electronic connection with the acoustic sub-system, which has a bidirectional electronic connection at least with an acoustic data processing unit. At least one Data transfer connection between an acoustic sub-system and a data processing unit is provided.

A preferred design of a hybrid sensor system comprises at least a second data processing unit. A second data processing unit can carry out a number of in particular auxiliary tasks in the context of pre-processing of sensor data in order to speed up data evaluation or post-processing of data in order to prepare data for interface transfer to be used in connected control systems, e.g. for defence or display systems. A second data processing unit could also provide an extended storage capacity. A data processing unit may have a stored electronic database of weapon systems or weapon locations or weapon specifications or topographic information about the area of operation to be used for reference e.g. for data within calculations. A second data processing unit could also be an acoustic data processing unit. Data processing units with adapted electronic circuits for parallel processing of data from a number of microphones or from a number of antenna elements are preferentially installed in quick response hybrid sensor systems. A second data processing unit comprising a transceiver for data exchange within a network of hybrid sensor systems is preferentially used by interacting groups taking advantage of swarm intelligence and computing power e.g. by groups of robotic systems.

In the hybrid sensor system, an active or passive radar sub-system and an acoustic sub-system are operated closely to each other. If the two sub-systems are placed at separate locations, both sub-systems shall be constructed with a moderate mechanical profile in order to avoid mutual blockage of the field of view. As an alternative, a common housing has been designed, which incorporates both sub-systems by placing the acoustic antenna on top of the radar antenna.

A hybrid sensor system can be used for monitoring a flying projectile. Furthermore, a hybrid sensor system can be used for monitoring a moving object that has some reflectivity for radar waves, e.g. a vehicle or a missile. A flying projectile is monitored by a hybrid sensor system, which can be stationary or mobile. A hybrid sensor system can be powered through a mains connection to a power grid. A moving sensor system preferably has an attached mobile power supply. Monitoring can be carried out with a set of at least two hybrid sensor systems, in particular systems having a distance in between, especially a distance that is larger than half of a length of a vehicle. In one situation, one system is moving and a second system is static. In another situation, two hybrid sensor systems used together are moving from a position. The sub-systems of the hybrid sensor systems are sensing a flying projectile. At least two sub-systems can cooperate for monitoring a flying projectile. This hybrid operation is preferably carried out when the distance between the hybrid sensor systems is shorter than a distance of a trajectory of a projectile. A hybrid operation uses data like radar data from a first hybrid sensor system, in order to calculate a trajectory or a weapon position or a calibre or a velocity of a projectile from data provided through a second hybrid sensor system, like acoustic data from a muzzle blast wave signal or a shock wave signal. The data combination method can be also very useful when the two hybrid sensor systems are working at different radar wavelengths.

By one aspect the wavelength of the electromagnetic radiation sent out by the radar antennas controls the radar field of view. By a second aspect the wavelength controls the minimum size of a projectile that can be detected with a radar echo. By yet another aspect, visibility of a projectile from one hybrid sensor system depends on circumstances like landscape or buildings. Therefore visibility of a projectile can be better with one sub-system of one hybrid sensor system than with an equivalent, referring to acoustic or radar sub-systems, of a second hybrid sensor system. This method is also useful when a sub- system of a hybrid sensor system fails e.g. because of a defect.

In this method, data from a first hybrid sensor system and data from at least a second hybrid sensor system are transferred to a processing unit like a radar data processing unit or an acoustic data processing unit or a data processing unit operating within a data fusion system. A system like a data fusion system comprises components required for carrying out a function like data fusion. Data transfer between the hybrid sensor systems is carried out by means of electronic signals in particular utilizing electromagnetic radiation within a transceiver system, like a radar sub-system or a radio transceiver system communicating with at least two hybrid sensor systems. Data from a second hybrid sensor system are provided to a data processing unit of a first hybrid sensor system. A first hybrid sensor system is used for fusion of data from the first hybrid sensor system and data from a second hybrid sensor system.

At least one hybrid sensor system can be mounted on a vehicle. In a certain moment in time, a vehicle is moving in space with a controlled velocity. The hybrid sensor system is especially using a monitoring method for monitoring a flying projectile. The vehicle can be powered by a combustion engine driving an electric power generator. The vehicle can also be powered by a source for electric energy like a battery or a fuel cell. The vehicle can be driven by at least one electric motor or engine, e.g. in a hybrid drive system. When orientation control of the hybrid sensor system is required, e.g. in order to improve the reception of a signal, an electric motor can also drive the hybrid sensor system, in particular in a hybrid sensor system comprising an electric motor. A motor changing a relative position of microphones and antennas, can improve reception of signals, like acoustic signals. At least a part of the electric energy of the vehicle is powering the hybrid sensor system. A conductive connection between a battery and a hybrid sensor system is provided. A transformer system like a voltage stabilizer adjusts the electric voltage of an on-board powering device to a supply voltage required by a hybrid sensor system, especially when the hybrid sensor system is installed as supplementary equipment. The hybrid sensor system of the vehicle is powered by a mobile power supply on board the vehicle. This power supply is preferably an electric generator driven by a combustion motor or an engine, e.g. when the hybrid sensor vehicle is to be installed in a truck driven by a diesel engine. The power supply used can include a fuel cell. A fuel cell is preferred, when a number of electronic components of the hybrid sensor system, like radar transmitter, data processing units or electro motors are to be used for a long period of time, e.g. for more than a day. Fuel cells are particularly useful for good sensitivity of the acoustic sub-system by minimization of operational noises of the vehicle.

This device facilitates a modular implementation of a hybrid sensor system in a variety of vehicles like combat vehicles. Radar data and/or acoustic data are communicated by a transceiver system of the vehicle. A transceiver system comprises at least two sending units and at least two receiving units for data, of which one sending unit and one receiving unit is located on-board of the vehicle. Using the transceiver system, the vehicle can be operated automatically or from a distance with a radio remote control device by a human operator especially from a safe distance, i.e. a distance outside a radius of action from the vehicle. The operation of the vehicle is carried out at least in part by processes run on computer hardware. This computer hardware can be a data processing unit of the hybrid sensor system. Therefore movements like the velocity of the monitoring vehicle or the velocity of a projectile are controlled or monitored with the hybrid sensor system on the vehicle.

Commands from the human operator are submitted to the vehicle, in particular to a data processing unit of the vehicle through a human interface like a microphone or a touch-screen or a control stick. The human interface also has a bidirectional data interconnection with the hybrid sensor system. Stirring the movement of the vehicle is carried out using position monitoring devices like a camera or a radar system. Data like projectile data are used to control the velocity and the direction of the vehicle, preferentially in an automatic safety mode. The operation of the vehicle is aided by a data processing unit. A data processing unit, like a data processing unit connected to the hybrid sensor system is preferably used as an automatic operation system like an autopilot. The automatic operation system is controlling the functions and actions of the vehicle based on data through programmed routines. The vehicle is also provided with a navigation system, which delivers instructions on a position of the vehicle and on driving directions for the vehicle in respect to the vehicle surroundings to a data processing unit of an automatic operation system or an operator. The different devices and units in the vehicle are electronically interconnected. The electronic interconnection includes wires for power transfer and wires for data transfer.

The hybrid sensor system and a monitoring method according to this invention help to protect a vehicle from attacks by hostile weapons. Monitoring methods run by processes in the hybrid sensor system also help to protect a vehicle from projectiles due to friendly fire. In addition, hybrid sensor methods and monitoring systems according to this invention can be used to identify weapon positions without putting an operator under the dangerous threads of a weapon.

Further advantages and benefits of the invention can be derived from the following explanations which may bear additional inventive ideas by themselves.

A precise direction detection of a weapon is normally facilitated by an acoustic solution. Two of the acoustic signals are sensed by a group of at least two microphones. The accuracy can be further improved by using a higher number of microphones, e.g. 3, 4, 6, 8, or more microphones. An appropriate detection of the weapon as well as the projectile is achieved by a considerate selection of microphones. An acoustic signal can be a muzzle blast wave signal, a shock wave signal or at least one noise signal especially from a direction. The selection of microphones is taking into account that the detection of a weapon may demand a microphone with a high amplification of the sound signals in order to detect the muzzle pulse of the weapon. Projectiles passing in the vicinity of the microphone require a low amplification due to the strength of the sound signal. A high amplification may deform the shock pulse from the projectile when it reaches a range of 170dB. A deformation can be an abrupt reduction or cut-off of the pulse amplitude above a limit value or a modulation of the pulse curve beyond recognition.

A well adapted microphone for low amplification and shock pulse detection may reduce the capability of detecting the muzzle pulse at a long distance. Therefore, using a combination of microphones, especially of different amplification or sensitivity, for the sensor part of the acoustic sub-system has some advantages for a number of applications of this method. The choice of microphone supplier and the type of microphone is determined by the required detection range. With a correct choice of microphone, the acoustic technology allows to calculate the direction of the projectile, the projectile calibre, the position of the weapon, and to determine the projectile speed. Some calculation routines for weapon positions from acoustic data are described e.g. in WO 2006/036482 A2. The at least two microphones in the sensor part of the acoustic sub-system are located apart from each other. Placing the microphones at a distance gives information about shape or curvature of a wave-front. A good measuring geometry has at least some of the microphones of the acoustic sub- system in places of free view. Preferably the microphones are kept in positions with free view in a multitude of directions. In some hybrid sensor systems, the microphones are moved into a best view position prior to acoustic measurements. The hybrid sensor system performs best with an omni-directional configuration for listening to acoustical signals or sound from 360° azimuth and along the meridian of the sky, taking into account also curvatures of the landscape like hills and valleys.

Projectiles from weapons have electromagnetic signatures as defined by their echo pattern. This means that projectiles may be detected and recognized by a radar transceiver system. Antennas of a radar transceiver system are applied for transmitting and receiving electromagnetic radar energy. For this purpose, electromagnetic energy is sent out by a transmitter, which can also be called a transmitter antenna. A part of this energy reaches the flying projectile, preferably on a direct or straight line from the transmitter towards the projectile. A fraction of this energy is reflected or scattered backwards from the projectile to a receiver, which can also be called a receiver antenna. In analogy to the reflection of an acoustic wave, e.g. from a solid wall, this reflection of an electromagnetic radar wave is called an echo. A pattern of this echo, e.g. a spectrum of frequencies and amplitudes can be analyzed as an electromagnetic signature of the projectile. With this analysis, a value for the calibre of the projectile is calculated. The detection is independent of the projectile speed, which makes it possible to detect any projectile with a speed above or below the velocity of sound. The detection is based on the active or passive use of electromagnetic radiation.

With the presence of a flying projectile in the radar field of view, radar echoes are directed from consecutive projectile positions, also called reflecting positions, to the radar transceiver system. A number of reflective positions are observed. From a plurality of reflective positions, a trajectory of the projectile is calculated. At least two positions are needed for this calculation, but the accuracy is improved by using a larger number of positions like five or eight positions or an even higher number of positions, which are sequentially detected with the radar sub-system, in particular by the receiver. After a first detection, a pre-determined period of time is let to pass, before a second position is detected. After a first increment of time, a second increment of time may pass when a third position of a projectile is detected and recorded by means of a radar echo.

The configuration of the receiver antenna can be monostatic, bistatic or multistatic for receiving echoes from the surrounding. In a monostatic configuration the transmitter and the receiver are in approximately the same position, while in a bistatic configuration there is a significant distance between transmitter and receiver. A multistatic radar system contains a number of spatially separated monostatic or bistatic radar components within a common range of coverage. Based on these individual radar geometries, a distinction system with the added requirement of some level of data fusion to take place between component parts can be set up. The spatial diversity afforded by multistatic systems allows for different aspects of a target to be viewed simultaneously. The potential for information gain improves the monitoring quality of a hybrid sensor system.

Active or passive radar is utilized for the calculation of the direction to the projectile. Both radar types are utilized for the detection and calculation of the distance from a reference point to the projectile. Furthermore, radar systems can be used to obtain the direction and the speed of the projectile along its trajectory.

Projectile monitoring signals or data are treated by data processing. Data processing generates new data containing some modified information compared to initial signals or data. Data can be pre-processed e.g. by the radar sub-system when a radar signal has been sensed. Radar signals sensed with the sensors or also pre-processed data are transferred to the data processing unit. Pre-processing of data transforms data into a form that facilitates processing of data, therefore pre-processing is a special form of data-processing. In pre-processing redundant information or unnecessary information, like noise, may be separated from wanted information. In pre-processing averaging of data can be carried out in order to improve statistical significance of signals or accuracy of data. Data from the acoustic sub-system can be processed in the radar sub-system. Data from the radar sub-system can be processed in the acoustic sub-system. However, data processing can be carried out in a single data processing unit but an advantage of having a radar data processing unit and an acoustic data processing unit is the fact that both units are especially built for this task. There may be an advantage in speed, when processing procedures are carried out on process optimized hardware. Additional data, like control data, are provided to or by the acoustic data processing unit or the radar data processing unit.

Any sequence of sub-processes like extraction or transformation and combination of data, that involves data from the acoustic sub-system and data from the radar sub-system may be called a data fusion process. This process can also be called an early data fusion process, because data are combined at an early stage of data processing. The strategy of early fusion constitutes a strong contrast to sensor data fusion of information from independently operating sensor sub-systems. Another aspect of early fusion is an adaption of the acoustic sub-system, in particular of a microphone array by means of data from a radar sub-system. The adaption, e.g. by an attention for sound from a specific spatial angle can be facilitated by early direction information from the radar sensor. This information is available due to the difference between the velocity of light for electromagnetic waves and the velocity of sound for acoustic waves.

Hybrid fusion data are data generated in a fusion process, in which in particular signals from an acoustic sensor and signals from a radar sensor are used. In one respect, a type of data that could also be generated by processing signals from a single sensor is gained, but in general single sensor data are with lower precision or accuracy especially regarding quantity or size. A low precision can also be calculated as a large size of an error. Therefore, the quality of monitoring a flying projectile is very much improved by applying data fusion to data from at least one radar antenna and to data from a plurality of microphones.

The described method is particularly useful for position determination of one or more active weapons utilizing acoustic and electromagnetic signals independently or in combination. Firstly, it shall be mentioned that in the case of deactivating one sub-system, in particular within a hybrid sensor system comprising an acoustic sub-system and a radar sub-system, no data fusion will be performed. In this case the output information from the hybrid sensor system will only be based on the operative sub-system. Reasons for deactivating one sub-system may be e.g. due to a defect in one of the sub-systems or due to the intention to switch off the radar sensor to have a passive system only. This strategy may reduce the power consumption or help to avoid being detected by opponents. The positions of weapons are typically calculated along the projectile trajectory as determined by any of the two solutions or in combination.

Each one of the at least two data processing units is usable for calculations. A data processing unit can calculate a trajectory. For the purpose of calculation, the data processing unit is running at least one data processing routine, which uses an input and an output module for data. A processing routine is programmed for data extrapolation from input data. Calculations are carried out in time steps. One data processing unit transfers data from its output module to an input module of another data processing unit. One data processing unit receives data from a sub-system in particular through an input module. The same data processing unit can also send data to a sub-system. An input module and an output module can be a software component or a hardware component or both, they can also be one module with the capability of carrying out a bidirectional data transfer. This functionality can be achieved with a data processing unit or a sub-system that is of acoustic or radar type. The processing units form a unit network by means of unit interconnections, in particular for bidirectional data transfer. A unit network comprises a number of processing units. Processing units from different hybrid sensor systems can be part of a unit network. Different systems or sub-systems, like automatic operation systems or navigation systems can be members of a unit network. The number of members of a unit network is adjusted for determined operations. Processing units can be software programs running on the same hardware, while a second hardware processing unit is kept in redundancy-within a unit network. The hardware of a second processing unit can be broken or dysfunctional. Full processing capacity in one processing unit is achieved by providing this unit with measured detectable features, like data of the flying projectile. A radar sub-system and an acoustic sub-system acquire data and transfer data to the data processing unit, in particular to a data processing unit kept as a back-up for security in order to prevent complete system failure of the hybrid sensing system.

Acoustic signals affect the acoustical sensors. Microphones are a type of acoustical sensors. A common way of detecting acoustical signals is the transformation into electronic signals like voltages. With this signal conversion, the sound is measured by the acoustic sub-system. A form of evaluation of the acoustic signal is carried out especially inside the acoustic sub-system, e.g. a determination of a maximum amplitude of an acoustic signal in order to adjust a dynamical range, in particular an amplification factor of an amplifier for the electronic signal. These adjustments improve the quality of the yielded data by avoiding distortions due to exceeding a dynamical range of the acoustic sub-system. A number of acoustic data is extracted from a measurement of sound in the acoustic sub-system in particular by pre-processing acoustic signals. The acoustic sub-system recognizes two typical sound pulses, one from the passing projectile and one from the weapon. These two sound pulses provide information about a weapon position. The orientation towards the sound pulses is determined by a small group of microphones with known inter-distances, representing the sensor part of the acoustic sub-system.

One group of data includes the direction of a shock wave, like a spatial direction of wave propagation, and an amplitude of the shock wave, like the maximum amplitude. The group may also comprise the Fourier spectrum of frequencies recorded with the shock wave. A group of data should also include the relevant time stamp, in particular of the shock wave detection. This time stamp is based on synchronization, like an initiation with a common time. Synchronisation is carried out between sub-systems and sub-units like data processing units e.g. by transmitting a time normal from a time standard like UTC, i.e. Temps Universel Coordonné, or CET, i.e. Central European Time, to the sub-systems. Synchronization is carried out at the beginning of use like the start of an operation.

Another group of data provided by the acoustic sub-system includes the direction of a muzzle blast wave, like a direction in two or three dimensions of a coordinate system, in which the wave was propagating, and at least one amplitude of the muzzle blast wave signal, like the maximum amplitude. In addition, the group includes the time of the muzzle blast wave signal detection, especially based on a synchronization carried out previously. This group may also comprise a Fourier spectrum of the muzzle blast wave. Furthermore, data about the noise, like the general background noise, are provided by the acoustic sub-system. Acoustic data may include a value for a noise level, like an amplitude of noise, especially a level calculated as an average of amplitudes over a pre-determined period of time that preferably excludes the duration of a muzzle blast wave signal and a shock wave signal.

Acoustic data prepared from recorded sound by the acoustic sub-system are transferred to the acoustic data processing unit. Data can also be transferred to a number of data processing units or a processing unit other than the acoustic data processing unit. Data transfer is carried out with the velocity of light over a distance by means of electrons or electromagnetic radiation, like light. The acoustic data are further processed. Processing is carried out in the acoustic data processing unit. Processing is yielding at least one data. The data belong to a group of data.

One sub-group of data is related to properties of a flying projectile. These data include a trajectory angle, in particular a value or a number of values that is a most accurate description of the trajectory, like the spatial trajectory angle. This sub-group also includes a distance from a position of the acoustic sub-system to a position of the projectile. This distance is preferably the minimum distance to the projectile. The minimum distance is calculated to a position, which was or will be the point of closest approach. Therefore, the distance gives a measure of the danger of being hit by the flying projectile or a following flying projectile fired from the same weapon. Other data of this sub-group, which are related to the destructive potential of the projectile, are a velocity of the projectile, preferably the spatial velocity vector of the projectile, especially calculated for the point of closest approach. Further data in this sub-group are about the calibre of the projectile.

Another sub-group is related to a weapon. Dimensions of the weapon are also implicitly represented by the projectile, like the calibre of the projectile is corresponding to a calibre of a muzzle. A signature from the muzzle is the muzzle blast wave. So the preferred data of this group is the location of the weapon. The location can be calculated in terms of a spatial angle in respect to an orientation of the acoustic sub-system and a distance from the acoustical sub-system to the weapon. This position can also be calculated within a coordinate system, like a Cartesian system, represented by a group of three parameters. Coordinates in a reference system with an origin that has a distance to the acoustic sub-system can be calculated for the firing position of the weapon. Coordinates of a quasi-inertia system are preferred for data, when the data processing system contributes data to a network of processing units, for which a common spatial origin is preferably defined as a reference, e.g. based on topography or a satellite position.

Yet another sub-group may contain supplementary information. Supplementary information is information on the surroundings, which is not directly related to the projectile or the weapon, but which can be used to improve the precision of monitoring the flying projectile. Another advantageous use of supplementary data is for the adjustment of counter-measures in view of unwanted side-effects. Some data can be generated from an acoustic noise, like a noise level. A noise level includes sound produced by wind or rain or by machines or by creatures. A background noise may include voices. Data like a distance of a speaker or a number of voices can be extracted by calculation in a processing unit.

Contrary to the acoustic sub-system, the radar sub-system is able to detect the projectile before, during, and after passage with a new detection for each sample instance. Radar signals are measured by the radar sub-system. The radar signal comprises a radar echo, in particular from a flying projectile. The radar echo is received by a radar antenna. A number of neighbouring antenna elements are affected by a radar echo. A radar echo induces an electric current in an antenna element. Pre-processing or evaluation of the signal received by antenna elements is carried out in the radar sub-system. Pre-processing may include a step of amplification. Pre-processing may also include correlating signals from different antenna elements in particular in respect of a difference in the time of detection. Measurements of signals and evaluation of signals, like radar or acoustic signals, is carried out simultaneously. Processes in the radar sub-system are run with predetermined increments of time. Radar echoes are detected in predetermined increments of time. An increment of time can be between one microsecond or less and one millisecond. An increment of time can also be a period of time between one millisecond and one second or longer. An increment of time is preferably a fraction of a minute. Increments of time can be correlated with a repetition rate of a radar signal sent by a radar transmitter, in particular a radar transmitter of the radar sub-system thus improving the accuracy of measurements. A first increment of time is a first period of time and a following second increment of time is a second period of time, which can be a different period of time, but preferably has the same length, which simplifies evaluation.

Regarding the radar sub-system, the direction and distance towards a projectile is determined by exploiting an echo from the projectile, i.e. a signal that is initiated by electromagnetic energy sent by a transmitter towards the projectile and reflected from there to a receiver. The measurement of consecutive reflecting positions is the foundation for the continued observation of the projectile and the calculation of the trajectory by tracking subsequent detections with the radar sensor. The corresponding distance and aspect angle is determined. With a small series of radar detections, the radar sub-system can extract a trajectory for the projectile, e.g. trajectory angle and miss distance, calculate the speed of the projectile, and estimate the calibre of the projectile.

The radar sub-system provides a first detection of a flying projectile. After an increment of time, the radar sub-system provides a second detection of a flying projectile. After a first detection, following detections are made at an i^{th} increment of time, whereby "i" is a natural number like 1, 2, 3 to n. The value of "n" can be set by an operator. The maximum of "n" is determined by the processing hardware of the radar sub-system. The maximum value "n" can be set by a time interval of a flying projectile. At least one data out of a group of data is yielded from the radar sub-system. The group of data comprises an i^{th} radar detection, distance for an i^{th} radar detection, an i^{th} velocity vector of the projectile in two or three dimensions of a coordinate system, especially an i^{th} Doppler velocity, and the time stamp of an i^{th} radar detection, and in particular a radar cross-section.

Projectile data from the radar sub-system are obtained after identification of the flying projectile within radar echoes from surrounding objects like buildings or vehicles e.g. based on a frequency of the electromagnetic wave of the radar echo or based on an echo that arrives from a different direction after a time interval. Projectile data are then transferred to the radar data processing unit. The data processing unit analyzes data from a number of radar detections of a projectile. The data processing unit associates a number of radar detections with one projectile e.g. by using plausibility algorithms and calculates further data using data from different detections of a projectile. These data can be from the group of data comprising a trajectory angle, a minimum distance or a point of closest approach to the radar sub-system, a calibre, a velocity vector, and a radar time stamp in particular for the point of closest approach of the projectile to the radar sub-system. Preferably, a combination of these data is calculated. The accuracy can be further improved by calculating the data from a larger number of detections, like twice the number of detections. The accuracy can also be checked by repeating the calculations with a new set of detections made later than the first set of detections. Furthermore, the accuracy of monitored data can be improved by calculating a summed average of one kind of data, like the calibre of the projectile.

The properties of the projectile regarding dimension and velocity profile are basic aspects in the calculation of the projectile trajectory with the acoustic sub-system. Knowledge about the size and shape can be provided by the acoustic as well as by the electromagnetic sub-system, and thereby the well determined velocity profiles of the projectiles can be related. Since in the case of supersonic projectiles the speed of the projectile is higher than the velocity of sound, the arrival of the shock wave can only be detected by the acoustic sub-system after the projectile has passed the sensor. Subsequently, the direction to the origin of the shock pulse is calculated and the calibre is determined.

A dimension of the projectile is the calibre, which can be a diameter of the projectile or a perimeter of the projectile, in particular depending on the choice made by the operator by setting control parameters. An approximation of the calibre of the projectile is obtained by calculating an upper limit for values. Another approximation of the calibre is obtained by calculating a lower limit of values for the calibre. These calculations are also called an estimation of the calibre of the projectile, whereas the difference between the upper limit and the lower limit can be called the accuracy or error of the value, which is calculated for the calibre of the projectile. The same can be said about other data.

A muzzle blast wave or a shock wave measurement from the acoustic sub-system can be analyzed for the calculation of the calibre. The calibre obtained from the shock wave is usually more accurate than the calibre obtained from the muzzle blast wave. Calculations are carried out at least in one data processing unit. Calculations can involve using tabulated reference data. Data from a first monitoring event can be stored in a data base and reloaded for calculation of data with measurements from a second monitoring event. Calculations of data like a calibre can also be made with correlation algorithms. Acoustic waves are analyzed for their frequency spectrum, so that this spectrum can be compared with other data.

The analysis of the radar signal for the calibre of the projectile is following a different route, though some of the mathematical algorithms applied in the analysis may be the same. After the radar echo from a projectile has been identified, a radar cross-section is determined for the projectile. The radar cross-section has the dimension of an area, which reflects electromagnetic radiation. This area is determined by the radar sub-system. The area has a perimeter, which is related to a perimeter of the projectile. The radar cross-section is determined from at least one radar echo received by the radar sensor of the radar sub-system. Radar cross-section data are transferred from the radar sub-system to the data processing unit.

The trajectory of the projectile, i.e. the path of the projectile in time and space may be calculated by the acoustic or the radar sub-system using measurements of sound or measurements of radar echoes. The measurement of geographical positions for the projectile at several instances along the trajectory by the radar sub-system is used for calculating the trajectory, the speed of the projectile, preferably in different positions, and the flight direction of the projectile in two or three dimensions. The acoustic sub-system also determines the trajectory in two or three dimensions, either by iterative calculation based on the muzzle blast wave and the shock wave or by estimation, i.e. calculations with approximate values of data, solely based on the detection of the shock pulse. Furthermore, the acoustic sub-system calculates the weapon position, if the muzzle blast wave and the shock wave can be detected.

Based on the measurements and extracted process data, the trajectory is calculated backwards in time and space to the position of the firing weapon. In this calculation, data evaluated from measurements are used. The calculation in particular from radar data is carried out in predetermined decrements of time, which are a fraction, like 1/100 or less of the total flight time of the projectile. The data are determined using at least one sub-system, an acoustic sub-system or a radar sub-system. Especially data from a group of data are used, which include a velocity vector of the flying projectile, preferably in three dimensions, a distance from at least one sub-system to a point of closest approach with a related time stamp, a trajectory angle, and a projectile calibre.

Combining the two sub-systems (like the acoustic sub-system and the radar sub-system) to a hybrid detection system yields improved accuracy in the fused calculation of the projectile trajectory as well as the weapon position. Especially in cases where detection of signals is only partial or imperfect, missing information about the flying projectile can be amended. A number of monitoring situations can be handled with the method for monitoring a flying projectile, in particular the following cases
a) Radar detection as well as shock wave detection and muzzle blast wave detection,
b) Radar detection as well as shock wave detection,
c) Radar detection as well as muzzle blast wave detection,
d) Radar detection as well as acoustic noise level measurement,
e) Radar detection missing.

Data from subsequent projectiles fired by the same weapon can also be combined, in order to improve the accuracy of the calculation, e.g. by means of averaging. Output data from a third monitoring system can be used in the method for monitoring a flying projectile, e.g. by providing external monitoring data from a monitoring system to a data processing unit of a hybrid monitoring system.

A hybrid monitoring mode combines advantages of at least two monitoring sub-systems. There are different ways, in which these advantages are exploited. In a first hybrid monitoring mode, data with an acoustic time stamp are provided from the acoustic sub-system. Data with a radar time stamp are provided from the radar sub-system. Data based on related acoustic and radar measurement events are then combined. This combination can be the calculation of an average value, preferably a weighted average of a specific kind of data. Data having a time stamp within a predetermined time window are selected. The time window can be determined by a frequency of muzzle blast wave events. The time window can be determined using the radar velocity of the projectile.

Monitoring data from a single sub-system are improved by calculation with data from a second sub-system. Data from a group of data can be used in the first hybrid monitoring mode. This group of data includes the calibre and a trajectory angle of the projectile. The group of data also includes a projectile velocity as well as a projectile position and the time, especially the distance from the detector or sensor to the point of closest approach and the time when the projectile has been nearest to the respective sub-system, in particular the second sub-system. Another data from this group of data is the position of the weapon or even the position of the muzzle of the weapon. At least one data is used and at least one hybrid process fusion data is calculated. The calculated data, which are then transmitted e. g to other processing units or brought to the attention of an operator e.g. by means of display, belong to a set of data about the projectile and the weapon. Hybrid process fusion data are a weapon position, a trajectory angle of the projectile, a distance, in particular a distance from a hybrid sensor system to a point of closest approach of the projectile, a calibre of the projectile, and a time stamp for the moment when the projectile reaches the point of closest approach. Hybrid process fusion data are calculated from data obtained from a first sub-system, and data from a number of other sub-systems either acoustic or radar sub-systems are used in this calculation. The group of used sub-systems includes at least one radar sub-system and at least one acoustic sub-system. The number of sub-systems can be increased to 3, 4 or 10 or more depending on the requirement of precision for the determination of fusion data from the first hybrid monitoring mode. The groups and sets of data mentioned here with examples may contain other data discussed in the context of this invention and combinations of data like coordinates and vectors or data extracted or transformed with mathematical algorithms from acoustic signals or radar echoes.

A merit of the combined solution is the concept of fusing data from complementary sensors on a low processing level, i.e. an early fusion of measurements from both individual technologies e.g. acoustic shock wave detection and muzzle blast wave detection with radar detection. This strategy of early fusion, which is named hybrid pre-fusion does however not exclude an exploitation of an alternative or supplementary approach of hybrid process fusion later on, e.g. with data like projectile trajectories or weapon locations from both technologies, which are independently derived from sensor data or derived using hybrid pre-fusion.

Thus, the benefit of the proposed hybrid detection system is the continuous coordination and interaction between the acoustic sub-system and the electromagnetic sub-system, which is substantiated by an early as well as a later information exchange and data fusion between them, based on one, but preferably a number, most preferably all of the following measurements, calculations, and estimations.

From the acoustic sub-system:
- Direction of shock wave
- Amplitude of shock wave
- Time stamp of shock wave detection
- Direction of muzzle blast wave
- Amplitude of muzzle blast wave
- Time stamp of muzzle blast wave detection
- Trajectory angle
- Miss distance
- Weapon position
- Calibre (estimation)
- Speed of projectile (estimation)
- Time stamp for point of closest approach (calculation)
- Noise level

From the electromagnetic sub-system:
- Trajectory angle
- Miss distance
- Calibre (estimation)
- Speed of projectile
- Time stamp for the first radar detection on the projectile trajectory
- Time stamp for point of closest approach (calculation)

Hybrid pre-fusion is used in a second hybrid monitoring mode, which can also be combined with a hybrid fusion process. Hybrid pre-fusion is especially carried out in an iterative process. The second hybrid monitoring mode is using subsequent measurements from the radar sub-system. One aspect of hybrid pre-fusion concerns the control of measurements carried out by the acoustic sub-system. Radar echoes from a projectile are available with the velocity of light, while acoustic signals are received with the velocity of sound. Therefore, information discovered by the radar signal, e.g. the direction of a projectile, can be made available to the acoustic sub-system practically without any delay in time. This information can be used e.g. to increase the sensitivity of the acoustic sub-system by aligning microphones in respect to a certain quadrant of an atmospheric hemisphere. The quadrant of the weapon location is obtained by reversing the direction determined as the flight direction of the projectile e.g. from radar echoes of two projectile positions. Adjustments of microphone positions can be made within less than 0.2 seconds and before a sound from the projectile arrives. The sound from the projectile is a shock wave sound or a muzzle blast wave sound, also respectively named as a signal. The wavefront of the shock wave can arrive before the wavefront of the muzzle blast wave signal. The shock wave arrives at the acoustic sensor from a direction suggested by radar measurements. The muzzle blast wave signal arrives at the acoustic sensor from a direction suggested by radar measurements and in particular suggested by shock wave measurements. The shock wave arrives at the acoustic sensor from a direction calculated using radar measurements and in particular using the detection of a muzzle blast wave. The wavefront is particularly useful to define an accurate time stamp of the respective acoustic signal. Therefore adjustments of the acoustic sub-systems are made for the detection of the shock wave signal. Additional adjustments are made for the detection of a muzzle blast wave signal. Adjustments of the acoustic sensor may lead to a more precise detection of a direction and of a time stamp of an acoustic wave. The acoustic sensor is adjustable by an increase or decrease of a sensitivity level or a signal amplification factor.

An adaption of the acoustic sub-system, in particular of a microphone array, can be facilitated by early direction information from the radar sensor, which is available due to the difference between the velocity of light for electromagnetic waves and the velocity of sound for acoustic waves. The early direction information from the radar sub-system can be used to evaluate the measurements of the shock wave, in order to obtain a fairly precise first set of coordinates of a position of a weapon. This information can be transferred from the acoustic data processing unit as control data to the acoustic sub-system, which may then search for the associated muzzle blast wave sound. The muzzle blast wave sound gives another marker for a position of a weapon. The detection range of the acoustic sub-system is increased by threshold adaption and by adaptive beam forming.

For this reason, the detection parameters from the radar sensor are processed within the acoustic sensor to determine the field of interest for acoustic detection (shock wave detection and muzzle blast wave detection). This determination is done by exploiting the trajectory angle, the miss distance, the caliber of the projectile, the velocity of the projectile, and the time stamp for the point of closest approach (PCA) from the radar sensor. These parameters allow the calculation of detection sectors for the potential origin of the muzzle blast wave and of the shock wave. The detection sectors in combination with the time stamp for the PCA from the radar sensor translate first into a minimum and maximum range and consequently into a time interval for an expected acoustic detection of the muzzle blast wave and of the shock wave respectively.

Another aspect of hybrid pre-fusion concerns the analysis of measurements carried out by the acoustic sub-system. For example, the weapon position can be determined through the calculation of an interception point. The interception point is a crossing point between the projectile trajectory derived from the radar sensor and the direction of the muzzle blast wave derived from the acoustic sensor. The interception point by another aspect can as well be based on the time difference between the observation time, i.e. a time stamp of the projectile for the point of closest approach (PCA) by the radar sensor associated with the velocity of light and the time stamp of the arrival time of the muzzle blast wave at the acoustic sensor associated with the velocity of sound. Therefore a time stamp of the acoustic sub-system and a time stamp of the radar sub-system are taken into consideration. The velocity profile of the projectile and the estimated caliber of the projectile together are taken into consideration. In this way the geometric constellation between the projectile trajectory and the propagation line for the muzzle blast wave is determined.

Other data, like a direction of a radar detection, a distance of a radar detection, a Doppler velocity of a detection, and a calibre of the projectile, can also be used in hybrid pre-processing. Depending on the processes and available data, hybrid pre-processing can yield a trajectory angle, a miss distance, a time stamp for a point of closest approach, a weapon position, a calibre of the projectile, a speed of the projectile, or a combination of them.

Hybrid detection methods can better deal with multiple or simultaneous shots than standard detection methods using one type of sensors or sensors for only one type of detectable features by improving the association of a shock wave and a muzzle blast wave from the acoustic signal with a projectile thus assigning them to one firing event.

The false alarm rate can be reduced based on hybrid pre-fusion of sensor data. This process could also be called a third hybrid monitoring mode, because elements of the first hybrid monitoring mode and the second hybrid monitoring mode are combined. When a shock wave sensing event occurs in the processing of an acoustic signal, which has been recorded as an acoustic sensing event after initiation of an acoustic sensor, this shock wave can be a false alarm. Validation leads to a classification of a signal like a shock wave signal as a true event or a false event. This classification is made by correlating the shock wave event with detections made by the radar system. Correlation can be done by comparing a direction of a shock wave signal with a direction or a trajectory of a projectile, taking respective time stamps like the time stamp for a point of closest approach and a time stamp for the arrival of a wavefront of the shock wave signal into consideration. A false shock wave event is uncorrelated to an electromagnetic signal like data from radar echoes. A shock wave event is uncorrelated with an electromagnetic signal when data obtained from a shock wave are not within an interval as expected based on data calculated from an electromagnetic signal. False alarms from the acoustic sub-system are avoided by validating acoustic shock pulses with detections made by the radar sub-system.

A further aspect for the reduction of false alarms within the scope of this invention is concerned with a false alarm threshold for radar detections. A false alarm event from radar detection is an event, which was not caused by a flying projectile but another moving object like a bird or by scattering of signals e.g. at obstructions or interferences of electromagnetic waves. Radar projectile monitoring events can be validated. A signal due to a false alarm event is below a signal threshold. Validation is carried out e.g. by comparing a radar signal with a radar signal threshold. A false signal is discarded. The radar signal threshold is calculated using data determined from acoustic noise by the acoustic sub-system. Radar detections are validated in the context of changing conditions of the surrounding. Therefore, the false alarm threshold level of the radar sub-system is adapted when the acoustic noise level measured by the acoustic sub-system indicates such an adaption. The radar signal threshold is determined in correspondence to a radar time stamp, which is provided with the radar detection. The acoustic noise level is evaluated for a pre-determined time interval, which includes the moment of the radar time stamp. Whenever the determined acoustic noise level is higher than a pre-set or specified noise level, the radar signal threshold will be given a lower value than a previous value, e.g. a value corresponding to a pre-set noise level. This change improves the true alarm acceptance. When the noise level determined from the acoustic wave is lower than a pre-set value, the radar signal threshold is set to a higher value. This change improves the suppression of false alarms. In order to change the false alarm threshold, a radar signal threshold is provided in particular by the acoustic sub-system to the radar sub-system. An adjustment of the radar signal threshold is made in the radar sub-system, when the preset value of the threshold in the radar sub-system disagrees with the new value provided. The adjustment is preferably a replacement of a first value by a new value, so that following processes will be carried out using the new value.

The radar sub-system is adaptable. Adaptation of the radar sub-system is preferably made in respect to the acoustic sub-system. An adjustment of at least one orientation, like an orientation in respect to a solid angle can be made. An orientation of a radar sub-system can be chosen in order to monitor signals from a preferred direction of the acoustic sub-system. At least one distance of the radar sub-system can be adapted. Such a distance is e.g. a distance between the radar sensor and the acoustic sensor. This distance can also be the distance between a radar transmitter and a radar receiver. Also at least one dimension of the radar sub-system can be adjusted. The diameter of a ring with antenna elements can be increased, in order to monitor signals arriving from a direction covered by a microphone. With adjustments of a configuration of the radar sub-system, monitoring of acoustic signals and/or monitoring of electromagnetic signals can be improved. The improvement of the reception of a signal is achieved by undisturbed monitoring of the signal.

An acoustic or an electromagnetic signal can be disturbed by blockage. Wave signals are transformed by interferences, which may change the information received. An object like a microphone or an antenna may pose a shield for an arriving wave signal, when the object is located across the path of signal propagation towards a sensor. In the shadow of an object, a sensor usually receives a distorted signal or no signal at all. This problem can be overcome by adaptation of a sending sub-system like a radar sub-system. An adapted angle of radar radiation is used e.g. to send out a radar wave with a pre-defined polarisation like a linear polarisation, which can also be defined as an alignment in respect to the mast of the hybrid sensor system. When a flying projectile or another object reflects a radar echo of the transmitted radar wave, the polarisation, in particular a direction of polarisation of the radar echo, can change. The polarisation can be measured with an antenna element thus providing additional monitoring information.

Radar signals can arrive at the radar sub-system from at least a hemisphere of directions. Radar signals include radar echoes from objects which are monitored with the radar sub-system. Monitoring is therefore carried out in three dimensions. At least one dimension of monitoring like a radius or a distance is controlled with the power of the transmission of a radar wave. A radar wave is sent out into a multitude of directions. The energy of the radar wave at a distance from the transmitter depends on the power or energy used for sending out the radar wave. The power transmission of at least one antenna can be controlled. Radar power transmission of a first antenna element into a first direction can be controlled to be higher than power transmission of a second antenna element into a second direction. Radar echoes from a first direction corresponding to the first antenna element using a higher power are monitored from a wider range than radar echoes from a second direction corresponding to a second antenna element using lower power. Furthermore, an angle of radiation transmission or/and detection can be controlled preferably with each antenna element.

When the radar sub-system is used near a human operator, e.g. on a monitoring vehicle, for the detection of flying projectiles, the radiation power has to be limited. The radiation in this situation must comply with a power threshold for electromagnetic human exposure. The electromagnetic power density should be limited so that humans can be permitted in the direct surrounding of the sensor without any risk to their health. The radiation from the radar sub-system can be controlled with the radar sensor of the radar sub-system. For limiting the transmitted power to a safe level, the radar sensor should detect a power density from the radar transmitter of less or equal to 10mW/cm². More precisely, the power limit of 10mW/cm² should not be exceeded at the minimum distance of 5cm from the radar sub-system. In a proposed design of a hybrid sensor system, the radar sensor for controlling the compliance with safety limits is preferably placed between a radar transmitter and an operator, like the pilot of a vehicle. In a radar measuring situation, the radar sensor is nearer to an operator than the radar transmitter. By measuring the transmitter power, a limit of 10mW/cm² is controllable even for smaller distances from the transmitter like 1 cm, e.g. for servicing the antenna, or for larger distances, like a distance of 1 m to an operator, especially for optimization of a radius of the radar field of view. The power limit can be exceeded e.g. by 100mW/cm² or any pre-defined value, in particular for a short period of time like a number of seconds or a number of milliseconds, when the measuring situation requires a higher power for monitoring the flying projectile. However, in cases or places where no limitations for electromagnetic power density apply, electromagnetic energy of more than 10mW/cm² may be transmitted for the sake of the function. One aspect, which can be improved with a higher power, is the size of the radar field of view.

With the monitoring method, a radar echo is detected. The radar echo is generated within a dihedral angle in respect to a hybrid sensor system. A first radar echo is detected within a first dihedral angle and a second radar echo is detected within a second dihedral angle. The difference between a first and a second dihedral angle, which can be attributed to a first and a second position of a flying projectile, is an angular resolution of radar echoes. The angular resolution is used to distinguish between a first and a second position of a projectile and refers in particular to a minimum distinguishable distance for a defined radius, like a radius for a radar field of view. The angular resolution can be controlled by means of a number of antenna elements. By operating every second antenna element in an array of antenna elements, the angular resolution for the detection of the radar echo is reduced. The advantage is a lower consumption of electric energy. The angular resolution is also controlled by a position of at least a first antenna element. An antenna element position defines a measuring relation to a second antenna element. A measuring relation between a first and a second antenna element is used for the determination of a direction of a measured radar signal.

The first antenna element is preferably located in a first ring with a number of antenna elements. The second antenna element can also be located in the first ring, but is advantageously located in a second ring with antenna elements. Additional rings with antenna elements may belong to the antenna array, which as a whole can also be called an antenna. Using a number of rings with antenna elements improves spatial resolution of radar signals arriving from a direction with an elevation angle. At least two antenna element rings used for the detection of radar signals can be placed in a position, which improves the resolution of radar signals from directions with an azimuth angle, in particular when the rings are turned into a gap position placing an antenna element of a second ring between two antenna elements of a first ring. Another aspect of the antenna geometry is the inter-distance between antenna elements, or between rings with antenna elements, which improves the angular resolution for detecting a direction of a radar echo. The inter-distance of antenna elements can also be described as an opening angle between at least two antenna elements. Antenna elements are located and especially distributed evenly over a ring on a cylindrical surface. The configuration of antenna elements is of advantage for high-resolution measurements with a radar sub-system comprising a static antenna system. The versatility of a static antenna system is improved, when the array of antenna elements is adjustable. The resolution of radar detections within a dihedral angle of interest can be improved.

Flying projectiles can also be monitored with a rotating antenna. A radar sub-system comprising at least one rotating antenna can scan a plurality of directions. In the course of measurements, the antenna rotates with a frequency over an angular range of 360 degrees. Within a rotation, at least one projectile, but also a number of projectiles can be checked independently. A second position of a flying projectile is obtained preferably much faster and as possible not later than 50 ms after a first detection, thus defining two positions of a trajectory of the projectile. Information obtained from radar echoes detected with the radar sub-system is transferred to the acoustic sub-system. The update of the acoustic sub-system is carried out with the frequency of a rotating antenna, and the data are preferably marked with a time stamp representing the rotational frequency.

An antenna element can be used as a sender for radar waves. A sender can also be named a transmitter. The same antenna element can also be used as a transmitter for at least one radar frequency, preferably a frequency band. In a different mode of operation, the same antenna element used as a sender can detect an echo from a sent-out radar wave. The antenna element can also detect a radar wave sent out by a second, especially a different antenna element. The mode of operation of the antenna element is defined with electronic signals from a processing unit. The processing unit defines if an antenna element is operating in transmitting or in receiving mode. Antenna elements can also be implemented for permanently either sending or receiving signals. Depending on requirements like compactness of design, demand for electric energy, or angular resolution, an antenna element is controlled in particular to transmit electromagnetic amplitude and frequency.

The electromagnetic wave can be sent out and received as continuous waves or in wave packets. Wave packets are particularly useful for determining the runtime of an electromagnetic wave from a sender to an object and back to the receiver. The runtime of wave packets is typically shorter than the time interval between two wave packets. After sending out the radar wave, echoes are received from different positions. An echo can be received by a number of antenna elements. With at least two antenna elements, the direction from which the echo arrives is defined. This direction changes when a projectile produces the echo and flies crossing radial directions in respect to the radar sensor. When the projectile flies directly towards the radar sensor, i.e. along a radial direction, it can still be analyzed using Doppler analysis of the radar echo wave.

Detected radar signals are further processed in the radar sub-system. This processing can include pattern recognition. A pattern can be a distribution of frequencies or a spatial distribution in particular of amplitudes of electromagnetic energy. When an electromagnetic wave is reflected or scattered by a moving object, the phase and the frequency of the electromagnetic wave can be changed. This change is analyzed as a Doppler phase or frequency shift, by comparing data received from a radar echo with data used to generate a transmitted electromagnetic wave. Furthermore filtering techniques based on analogue electronic circuits, or filtering techniques for analysis of digital data are used to extract information from a radar echo. In this way, moving objects within the field of view of a radar sub-system can be identified. Also static objects within the field of view are detected. Static objects can be used to measure the velocity of a radar sub-system, like the velocity of a vehicle carrying the hybrid sensor system. Information about a moving object is received with the reflected energy from a moving object, in particular energy from a radar source like a radar transmitter.

The precision of the monitoring method is controllable. The precision refers to the accuracy, with which a distance or direction of a signal, in particular an acoustic signal or a radar signal is monitored. The monitoring precision can be controlled with the density of an array of antennas. The density of antennas can also be described as a number of antennas in a volume or on a surface like the housing of a radar sensor. In addition, a monitoring precision can be controlled with a density of a microphone group. The density of a microphone group refers to a number of microphones in a given volume of an acoustic sensor. Furthermore, the precision of the monitoring method depends on the distance of the acoustic sub-systems and the radar sub-systems involved in a measurement. The precision also depends on a distance between a radar transmitter and a radar receiver. The distances are preferably of the order of magnitude of a distance between a monitoring sub-system and a point of closest approach of a projectile or less.

A flying projectile can be monitored with good precision. A second flying projectile is monitored with an equivalent precision. A first flying projectile and a second flying projectile or a number of flying projectiles are monitored simultaneously. The flying projectiles may have been shot by a number of different firing weapons. The position of a first weapon is calculated from data of the first flying projectile and a position of a second firing weapon is calculated from the data of a second flying projectile. A number of locations of firing weapons can be calculated. In the calculation, the trajectory of the projectile, like the first and the second projectile is retraced back in time to its origin using inverse time steps. The origin of the projectile is the firing weapon. The precision of the calculation of weapon positions is increased by using preferably a number of sub-systems providing data for the calculation. In addition, data from a number of monitoring systems, like hybrid sensor systems can be combined in the calculation. False events can be excluded by comparing data from one sub-system or from one monitoring system with data from another sub-system or from another monitoring system.

In a combat situation, the monitoring system can be mounted on a vehicle so that it is moving with the vehicle velocity in a direction. The direction of the vehicle is controlled while the monitoring of flying projectiles is carried out. The vehicle can drive with a speed relative to at least one firing weapon. By continuously monitoring flying projectiles, also the speed a firing weapon is driving with can be determined. In this case, the position of the firing weapon determined from projectile data will change continuously within a period of time. In the course of the measurement, preferably at least one flying projectile fired from one weapon is monitored. Still a number of flying projectiles fired from a number of weapons can be monitored simultaneously. Data obtained from one flying projectile or from a sequence of flying projectiles fired from a weapon, like a radar position or a velocity vector of the projectile or a distance of the projectile in particular to the point of closest approach to at least one monitoring sub-system, are determined from measurements. Data are corrected using a relative distance between two monitoring sub-systems. Data can also be corrected by taking a velocity vector of the monitoring sub-system into calculation. The velocity vector of the monitoring sub-system can be obtained from vehicle control systems. The velocity can also be measured using a radar sub-system mounted in or on the vehicle. Another method for determining the velocity vector or a position of a monitoring sub-system can involve a navigation system, like a satellite based navigation system.

A flying projectile is preferably monitored by a human operator using a hybrid sensor system. Monitoring data of the projectile are transferred from the hybrid sensor system to at least one human interface system. The human interface system prepares the data for recognition by the operator. An operator can recognize data based on an optical presentation using a display. Data can also be recognizable on devices using haptic features like a glove or a helmet. Another possibility for presentation of data to an operator is the transformation of data to an acoustic signal through a loudspeaker system. The data presented to an operator can be chosen based on control parameters for a monitoring system. Projectile monitoring data of particular interest to the operator are the position of the weapon, the calibre of a weapon and further parameters related to the trajectory of a projectile.

Projectile monitoring data are also used to control an active response device. Such a device may have offensive or defensive features. The device can be a weapon. The active response device can also be an autopilot of a vehicle. An active response includes counter-measures for hiding the vehicle or for deflection or capture of the projectile depending on the monitoring situation. The active response is carried out especially within a predetermined period of time in order to prevent any effect that may be caused by the flying projectile. A time for a reaction can be derived from parameters calculated while monitoring the flying projectile. The time can be calculated from a position of the weapon in combination with the velocity of the projectile. The calculation also takes into account the momentary position of the projectile, which is determined by analyzing a radar echo detected from the projectile. The flying projectile is monitored with the described methods and when monitoring is combined with an active response, the security of an operator or personnel in the vicinity of the flying projectile can be improved.

Monitoring methods of flying projectiles are particularly efficient, when they are carried out with a hybrid sensor system. The hybrid sensor system comprises a number of sub-systems. The hybrid sensor system also comprises a number of processing units. One of the processing units is an acoustic data processing unit. The acoustic data processing unit is capable of processing data forwarded by the acoustic sub-system. Acoustic data are sensed by the acoustic sub-system. The acoustic sub-system is connected to another sub-system. Data are transferred between sub-systems through interconnection means. Interconnection means include an interconnection of a sub-system with at least one data processing unit. Data are exchanged through interconnection means. Data transfer is preferably bidirectional meaning that a sub-system or a data processing unit is capable to provide or receive data. A bidirectional data transfer can be organized through a data bus system, securing in particular a sequence of transfer events. Data transfer is also carried out in parallel lines. Integration of the acoustic technology and the radar technology into a hybrid detection system yields a solution for detecting the location of the weapon as well as the trajectory of the projectile. This is achieved independently of the projectile speed. Additionally, the speed and the calibre of the projectile are determined by a combination of acoustic and electromagnetic means.

The radar sub-system and the acoustic sub-system are mounted to a mast. The mast can be a part of the hybrid sensor system. The mast is attached with one end to the mounting of the mast, like a flange or a tripot. The acoustic sub-system is attached to the mast at a distance to the mounting of the mast. The radar sub-system is also attached to the same mast at a distance to the mounting of the mast in the same direction from the mounting of the mast as the acoustic sub-system. The configuration of the hybrid sensor system is such that the acoustic sub-system preferably has a larger distance to the mounting of the mast than the radar sub-system, in particular referring to at least one transceiver antenna of the radar sub-system. Thus, a transmitter antenna of the radar sub-system can have a larger distance to the mounting of the mast than the acoustic sub-system.

The hybrid sensor system has a compact setup. The radar sub-system and the acoustic sub-system use common components. A sensor platform housing can be a common component. A part of a vehicle like the body of the vehicle can be used as a sensor platform housing. Another common component can be a mast, which carries the radar sub-system and the acoustic sub-system. In this way, both systems are collocated. The sub-systems of the hybrid sensor system can also utilize the same electronics for data processing, which can be common hardware, in particular computer hardware and especially at least one common processor. In addition, a common data exchange base like the same data base for measurements can be used. The data base facilitates unimpeded update and exchange of information between the sub-systems. Using the same data base for projectile monitoring, the quality of measurements and calculations as well as identification or discrimination of false events is improved. The present approach is facilitated by an intimate connection between the radar sub-system and the acoustic listening sub-system in such a way that the two sub-systems can interact and thereby expand the capabilities of the acoustic solution to cope with the determination of weapon positions in situations that otherwise would be difficult, inaccurate, or impossible to be solved. Quick update and exchange of information is achievable by means of the integration of the two sub-systems to a combined hybrid detection system.

The radar sub-system of the hybrid sensor system can be equipped with a rotatable antenna. At least one antenna or antenna element of a radar sensor is rotatable at least in one plane. A rotation in one plane can be combined with a tilt in one direction. The rotation can be changed from a first direction to a second, in particular reverse direction. The rotation is driven by a motor. The motor provides torsional moment for the rotation. One type of motor used for driving the rotatable radar antenna is a stepper motor. Another motor type to rotate the antenna could be a hydraulic motor. A rotating radar sensor or antenna provides excellent angular resolution.

Besides the version of a hybrid sensor system using a rotatable antenna, other types of hybrid sensor systems, working with static radar antennas are preferably operated in situations where any attention drawn to a monitoring vehicle should be avoided. The radar sub-system is equipped with at least two static radar antennas. At least one of the two static antennas, comprising at least two antenna elements, is a receiving radar antenna. The second of the two antennas is preferably a transmitting radar antenna. The radar sub-system may comprise a number of transmitting and/or receiving antennas or antenna elements, which are suitable for detection of a frequency band of electromagnetic radiation. Electromagnetic radiation is sent out or received in the form of a wave, which can also be called a radar wave or radar wave signal.

The radar sub-system, which is monitoring radar echoes from a number of directions, is preferably built with cylindrical symmetry. Therefore, the housing of the sensor platform has a surface which is especially cylindrical or bent like a polygon. Radar antennas can be placed on the housing of the sensor platform. An antenna of the radar sub-system, in particular a receiver or transceiver antenna, has a number of radar antenna elements. Each antenna element can detect a radar signal. The antenna elements are grouped in an array to form an antenna. The radar sub-system is built preferably with at least two arrays of radar antennas. In an array, the radar antenna elements are placed on a circular section of a cylindrical surface. In one array, the antenna elements can be positioned evenly forming a ring structure. The antenna elements along the first ring are located preferably coaxial to the housing or coaxial to the mast. The first array of antenna elements or ring is placed nearer to the mounting of the mast carrying the housing than a second array of antenna elements. The second array or antenna is also composed of a number of antenna elements along a second ring thus forming a level of antenna elements in parallel to a level of antenna elements from the first array. The second array or antenna is preferably coaxial and mounted at a side of the housing that is further away from the mounting of the mast than the first ring of antenna elements.

The radar antenna elements used in the hybrid sensor system, in particular as components of the radar sub-system, have preferably the same shape or the same dimensions. A radar antenna element can have the form of the letter "H". An antenna element can also have the shape of the letter "I". Another type of antenna element can be a horn antenna. A horn antenna comprises a waveguide made of metal, which is shaped like a horn in order to direct radar waves fed to the antenna. The waveguide can also guide an incoming radar wave towards a detector element like a detector wire or a resonant electronic detector circuit. The waveguide of the antenna element can also have a cylindrical or rectangular tubular shape with a conical structure closed at one end. The waves radiate out of the horn in a narrow beam. In a similar way, radar signals from a narrow spatial direction are received. Another type of antenna element that can be used in a radar sub-system as a part of the radar sensor is a patch antenna. A patch antenna has a dimension of the size of approximately one half of the radar wavelength. Patch antennas can be produced lithographically on dielectric substrates, therefore they are very compact structures which are easily fabricated. Micro-strip antennas are produced in a similar way and are also usable in radar detectors. Antenna elements of a first shape or type can be combined in a radar sub-system with antenna elements of a second type or shape. Radar data obtained with a first type of antenna elements e.g. from a first radar sub-system can be processed together with radar data measured with a second radar sub-system comprising a second type of antenna elements.

Versatility of the radar sub-system is particularly high when the radar antenna element used is adjustable. An orientation of the radar antenna element can be determined. The orientation of the antenna element corresponds to an angle, particularly an angle measured in respect to a central axis of the mast carrying the radar sub-system. Other parameters of an adjustable antenna element are the dimensions of the antenna element. Dimensions are adjusted in particular mechanically by setting a length of an antenna element. Within the radar antenna, the antenna elements have a position which is adjustable. The position of a group of antenna elements is changeable maintaining inter-distances between the antenna elements, in particular constant inter-distances. The position of an antenna element is also changeable by adjustment of inter-distances of antenna elements. Other modifications of antenna elements can be due to the electronics connected with the antenna element. The electronics, in particular the electronic circuits, can be set to a frequency interval which then is detected from the radar antenna element. Similarly, the frequency of the transmittable wave or radar wave is adjustable. Such techniques are particularly useful for distinguishing radar echoes from different objects or different materials.

Different types of wave transmitters are used in particular for different ranges of wavelength. A radar sub-system can be built with a transmitter for one radar wavelength or with a number of transmitters. When the radar sub-system comprises a number of transmitters, these transmitters are in particular used for different wavelengths. A group of transmitters like an array of antenna elements is used for a first wavelength and a second group of transmitters is used for a second wavelength. The phase between the waves sent out by different transmitters is controlled. One wavelength used can be more than 1 mm long. Another wavelength used, in particular a second wavelength, can be in the range from 5mm to 50mm. Another interval of wavelength which is useful for the detection of a large size of calibres is a wavelength range limited by 2mm and by 100mm. Radar waves with longer wavelengths are less absorbed in the atmosphere than radar waves with shorter wavelengths. Therefore, radar waves with longer wavelengths provide a larger detection range.

Obstruction of a radar wave sent out by a radar transmitter is particularly small when the transmitter is mounted on top of a mast. The transmitter in this case is an antenna at the end of the mast. For reasons of symmetry in respect to the radar sensor, the radar transmitter is placed collinear to the central axis of the hybrid sensor system. This can be achieved in particular when the radar transmitter is mounted at an end segment of the mast. The transmitter power of the radar transmitter can be increased even further, when the end segment of the mast is moved to a larger distance from the mounting of the mast by means of a telescope arm. The radar transmitter mounted at the end segment of the mast is then disposed at a distance from the radar receiver for the detection of radar echoes.

In yet another configuration of a hybrid sensor system at least one microphone is mounted at the mast. One microphone can also be mounted to an end segment of the mast. The end segment of the mast is preferably connected to the mast by a telescope arm, so that the distance between the at least one microphone carried by the end segment of the mast and further microphones attached to the mast is adjustable, so that it can be increased or decreased. Increasing the distance improves a resolution for acoustic signals for an opening angle, which is described as an elevation over the azimuth angle. Decreasing the distance can be useful for hiding. In the case that the mast comprises at least two segments, the end segment is especially the most distant segment of the mast referring to the mounting of the mast. By changing the position of at least one microphone attached to the end segment of the mast, monitoring acoustic signals from a multitude of directions including directions with obstructions can be improved. When the hybrid sensor system is mounted on a vehicle, increasing a distance of at least one microphone to the vehicle helps to discriminate noise from the vehicle like the roaring of a motor against sound from a flying projectile or a muzzle blast wave event. The passive acoustic sub-system is characterized by a network of microphones with free view into all directions so that the sub-system is able to work omni-directional.

The group of microphones mounted to the mast typically comprises a first microphone and a second microphone. The first microphone can belong to a first group of microphones and the second microphone can belong to a second group of microphones. The two groups of microphones are mounted at the mast. The microphones are in particular placed near the end segment of the mast, so that the microphones have a distance to the radar sensor. The first microphone has a larger distance to the radar sensor than the second microphone. A group of microphones can have the same distance to the radar sensor. The second microphone is mounted to the mast at a length from the radar sensor which is shorter than the length between the first microphone mounting and the radar sensor. The position of each microphone is adjustable. The first group of microphones can be rotated against the second group of microphones, especially by placing a first microphone in between two other microphones, an angular resolution of the acoustic sensor can be increased in particular for azimuth detection.

The end segment of the mast can carry a microphone or a radar transmitter antenna. Depending on the application, a microphone at the end segment of the mast can be replaced by a radar transmitter antenna. Also, a radar transmitter attached to the end segment of the mast can be replaced by a microphone. In this way, the hybrid sensor system is adjusted to different measurement situations. The position of the end segment of the mast, which is carrying either a microphone or an array of microphones or a radar transmitter antenna or a combination of them, is adjustable. An adjustment can be made by means of a hinge joint or/and a rotor between the mast and the microphone or antenna attached to the end of the mast. Therefore, an adjustment of the hybrid sensor system can be carried out in respect to the mounting of the mast.

The acoustic sensor of the hybrid sensor system is monitoring acoustic sound particularly well when at least one microphone is adjustable. The adjustment of the microphone refers to the determination of a position of the microphone or a sensitivity level of the microphone. The adjustment is made by means of an articulation. When the articulation is a mechanical hinge, the position of the microphone, in particular the distance of the microphone to the mast, will change. After this adjustment, two microphones of the group of microphones are further apart from each other. A spatial direction can be better monitored when an acoustic signal arriving from this direction is recorded by two microphones having a distance in between. The mechanical hinge, or flexible mounting used to set the distance between two microphones is attached to the mast of the hybrid sensor system. When the adjustment is carried out by means of an articulation, this articulation can be due to an acoustic signal. An acoustic signal arriving at the microphone can induce a change of sensitivity of the microphone, in particular when an amplitude of the acoustic signal reaches a preset limit, either an upper or a lower limit for signal detection. As a consequence, an amplification factor of an amplifier is re-set in the signal processing for following detections of signals by a microphone. Adjustments can be used to follow acoustically a number of muzzle blast wave signals from a firing weapon with a hybrid sensor system, which is driven away from a position of a weapon by a vehicle.

Quick processing of acoustic signals is achieved when at least one microphone is connected to an individual acoustic data processing unit. Preferably all microphones of the hybrid sensor system are connected to a separate data processing unit. Each microphone is connected to a data processing unit for determining the weapon position in two or three dimensions. The acoustic data processing unit can carry out pre-processing of acoustic signals recorded by the microphones. The signal and data generated by each microphone and the respective data processing unit is then received electronically by a further data processing unit, which reconstructs a wave front from signals recorded by the microphones. The wave front may be due to a muzzle blast wave signal or a shock wave signal.

The hybrid sensor system is built in a way that the acoustic sub-system provides a 360° field of view. This means that the full azimuth orientation can be monitored by the acoustic sub-system, so that projectiles passing on any side of the hybrid sensor system are detected. Weapon positions indicated by a muzzle blast wave sound from before or behind the hybrid sensor system can be calculated. In addition, the radar sub-system has a 360° field of view in azimuth. This field of view is achieved either with a rotating radar antenna or with a static distribution of antenna elements. The acoustic sub-system and the radar sub-system have a field of view corresponding to an opening angle for an elevation thus establishing detection of a direction with a third dimension. The field of view in elevation is at least 90°, but can be more or less depending on the topography of the surroundings or on the geographic position of the hybrid sensor system e.g. on a hill or in a valley.

Another feature of a radar sub-system, which means an advantage in the design of a hybrid sensor system according to this invention, is a static low power antenna solution with 360° field of view in azimuth realized by centralized or distributed antenna elements that may be mounted on a cylindrical or curved surface of a sensor or e.g. along the periphery of a land, water, or air vehicle. An arrangement of distributed antenna elements may increase the angular precision of the hybrid detection system. Either transmit-receive antennas or separate antennas for transmission and reception can be applied, while omni-directional antennas (e.g. rod antennas) and directional antennas (e.g. horn antennas or patch antennas) are suitable. With configurations of the hybrid sensor system described here, also flying projectiles approaching the hybrid sensor system or the monitoring vehicle from above or below can be detected. Therefore, a hybrid sensor system according to this invention provides maximum security in particular for personnel in the neighbourhood of the hybrid sensor system. The operating crew is enabled to initiate any necessary counter action in time or counter actions are started automatically depending on the pre-set control parameters.

The described hybrid detection system using acoustics and radar combines the advantageous properties from the two technologies and represents therefore a more robust solution for the determination of a weapon than any of the two individual technological solutions can provide. The implemented concept of automatic process control e.g. in combination with an autopilot liberates operators from defensive tasks and allows them to focus on other objectives e.g. in the process of rescue missions. Using hybrid sensor systems improves the efficiency in an assignment.

### Brief description of Figures

The understanding of the present invention can be enhanced by referring to the following figures which may show additional inventive aspects by themselves.
Fig. 1: Schematic illustration of the method by which a projectile trajectory is determined with the radar sub-system.
Fig. 2: Schematic illustration of the method by which a projectile trajectory and the weapon position is determined with an acoustic sub-system.
Fig. 3: Diagram of a hybrid detection system that fuses data from the acoustic sub-system and the electromagnetic sub-system for presentation to an operator.
Fig. 4: Data fusion from radar detection with acoustic shock wave detection and muzzle blast wave detection.
Fig. 5: Data fusion from radar detection with acoustic shock wave detection.
Fig. 6: Data fusion from radar detection with acoustic muzzle blast wave detection.
Fig. 7: Data fusion from radar detection with acoustic noise level measurement for false alarm threshold adjustment.
Fig. 8: Schematic side view of a hybrid sensor system with an acoustic sub-system and an electromagnetic sub-system.
Fig. 9: Schematic side view of a hybrid sensor system with a common housing for the acoustic sub-system and the electromagnetic sub-system.
Fig. 10: Schematic top view of a battle scene comprising two firing weapons and two vehicles equipped with a hybrid sensor system.

### Description of Figures

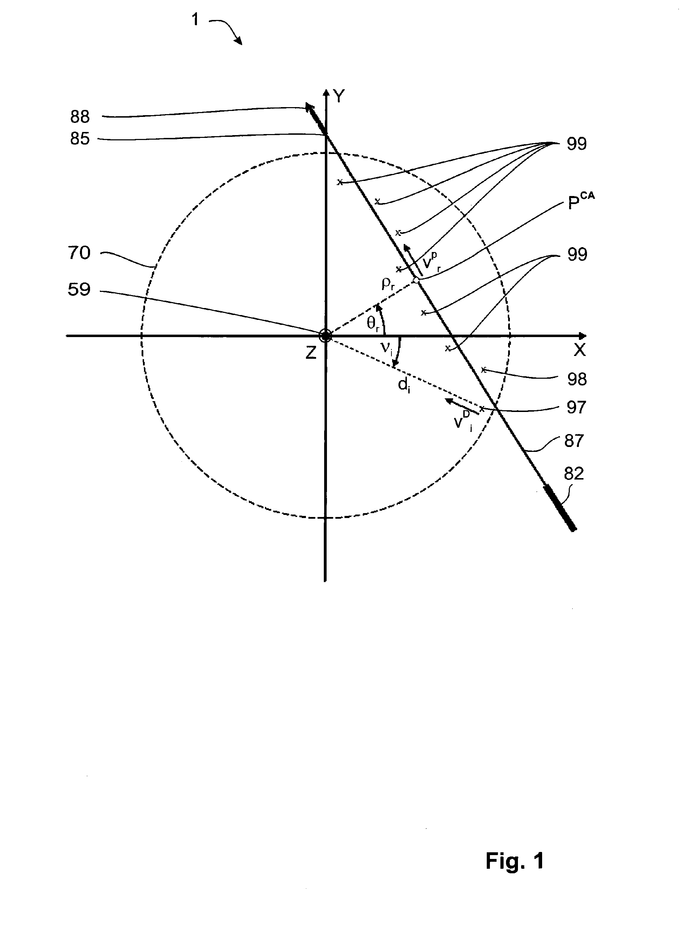

Figure 1 shows a measurement geometry within a three-dimensional orthogonal system of coordinates X, Y, Z for radar echo measurements with a radar sub-system (not shown). A method 1 for monitoring a projectile 85 fired from a weapon 82 and flying in direction 88 is depicted. The radar sensor 59, which is detecting a projectile 85, is placed in the point of origin of the system of coordinates X, Y, Z, where the respective lines are crossing. The radar sensor 59 detects radar signals within a radar field of view 70. The radar field of view 70 has an outer limit indicated by a dashed circle in the plane of coordinates X, Y. Radar echoes from projectiles like projectile 85 outside the radar field of view 70 cannot be detected by the radar sensor 59. A sequence of radar detections by the radar sensor 59, starting with the first radar detection 97, followed by the second radar detection 98, and additional radar detections 99 is shown in figure 1 as small crosses within the radar field of view 70. The radar detections 97, 98, 99 are made along the trajectory 87 of the projectile 85 starting from the weapon 82. The trajectory 87 shown as a straight line in the X, Y plane has a curvature in the direction of the coordinate Z. The trajectory curvature is at least in part due to the force of gravity taking effect on the projectile 85.

Any detection of the projectile 85, like the detections 97, 98, 99, is made with the determination of a distance dᵢ and a direction νᵢ with reference to the radar sensor 59. In a system of coordinates X, Y, Z, the directions νᵢ are measured from axis X using angles, in particular dihedral or solid angles, but any other point, axis or plane of reference can be used for the determination of a direction, depending on the system of coordinates used. For the first radar detection 97 and following detections 98, 99, a Doppler velocity v^{D}ᵢ is determined, where i = 1 for the first detection 97 and i = 2 for the second detection 98 and i equals a higher number in sequence for following detections 99. From the radar detections 97, 98, 99, the trajectory 87 and the point of closest approach P^{CA}ᵣ are calculated. The trajectory is by one aspect characterized by a miss distance ρᵣ, which refers to the point of closest approach P^{CA}ᵣ of the projectile. The miss distance ρᵣ has a length which is near to the minimum of all distances from radar detections dᵢ. The point of closest approach P^{CA}ᵣ is further characterised by a trajectory angle θᵣ which is a dihedral or solid angle in the frame of coordinates X, Y, Z, referring to the point of origin of this system and the axis X or the X, Y plane. The projectile 85 at the point of closest approach P^{CA}ᵣ also has a velocity v^{p}ᵣ. This velocity v^{p}ᵣ can be described by an absolute value and a direction in the form of a vector. The schematic illustration of figure 1 shows the method by which the projectile trajectory 87 is determined with a radar sub-system (not shown) using the sequence of detections 97, 98, 99 for the calculation of the trajectory angle θᵣ and the miss distance ρᵣ, i.e. the distance at the point of closest approach P^{CA}ᵣ.

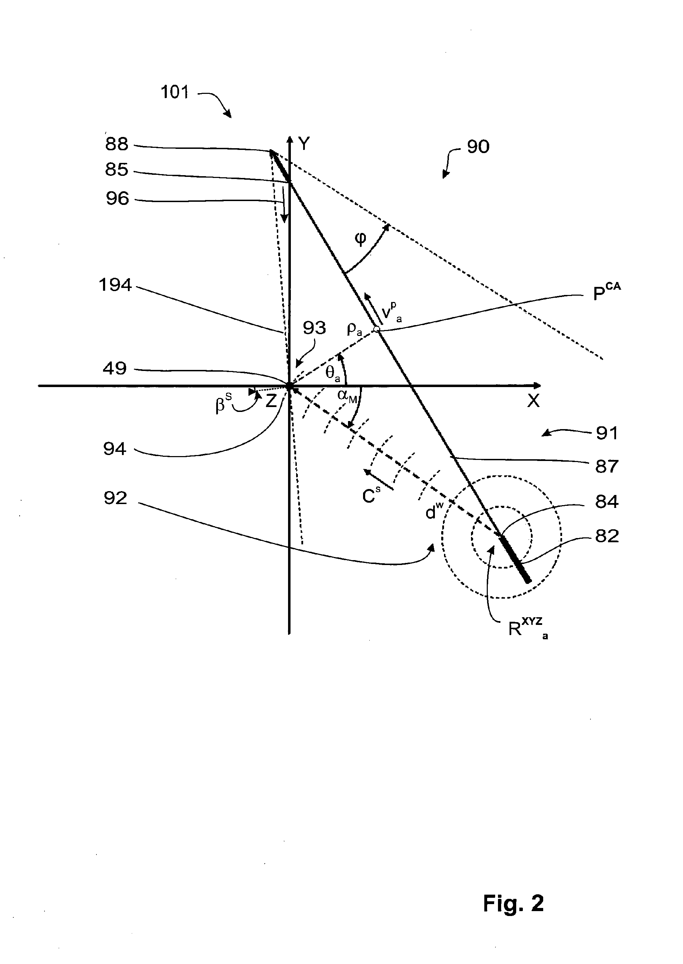

Figure 2 shows a schematic illustration of the method 101, by which the projectile trajectory 87 of the projectile 85 with the flight direction 88 fired from the weapon 82 and the position of the weapon R^{XYZ}ₐ is determined with an acoustic sub-system (not shown). In this illustration also a detectable feature 90 of a radar echo 96 is shown schematically as an arrow pointing towards the point of origin of the coordinate system X, Y, Z. Measurements of radar echoes like echo 96 are carried out with the radar sensor 59 of figure 1 simultaneously in the same time interval used for measurements with the acoustic sensor 49 in figure 2. An acoustic wave 91 is propagating towards the acoustic sensor 49. The acoustic wave 91 includes sound from the muzzle 84 of the firing weapon 82, which disperses in different spatial directions indicated as dashed circles or sections thereof, named as the muzzle blast wave signal 92. The wave front 94 sent out from the muzzle 84 arrives at the acoustic sensor 49 in a period of time. The muzzle blast wave signal 92 reaches the acoustic sensor 49 coming from the muzzle 84 with the velocity of sound c^{s}. The muzzle blast wave signal 92 and the wave front 94 are detected as an acoustic wave 91 arriving from a direction α_{M}, which is determined as a dihedral angle in the system of coordinates X, Y, Z in respect to the point of origin and in particular to the axis X.

Detectable features 90 also include the wave front 194 of the shock wave signal 93. The shock wave signal 93 is generated by a projectile 85 that is flying with a speed faster than the velocity of sound c^{s}. The wave front 194 has a conical shape, where the tip of the cone is the momentary position of the flying projectile 85. The cone opens with the Mach angle ϕ around the projectile trajectory 87, reverse to the flight direction 88. The detectable features 90 of the acoustical wave 91, like the shock wave signal 93 with the wave front 194 propagating in the direction β^{s} and the muzzle blast wave signal 92 with the wave front 94 arriving from a direction α_{M}, are processed in order to calculate the trajectory angle θₐ of the projectile 85 and the miss distance ρₐ, i.e. the distance at the point of closest approach P^{CA}ₐ of the projectile 85 in respect to the acoustic sensor 49. In addition, the velocity of the projectile v^{p}ₐ is calculated, especially for the point of closest approach P^{CA}ₐ. Further data (not shown) like chemical decomposition of the atmosphere are extracted from detectable features 90 and in particular from other detectable features (not shown) like light or spectra thereof. Particularly useful data (not shown) are the time of detection of the muzzle blast wave front 94 and the shock wave front 194. These moments in time (not shown) are then used for the calculation of a distance d^{w} to the weapon 82 and the position of the weapon R^{XYZ}ₐ. This calculation is also based on the knowledge about the trajectory 87 and the velocity v^{p}ₐ of the projectile 85.

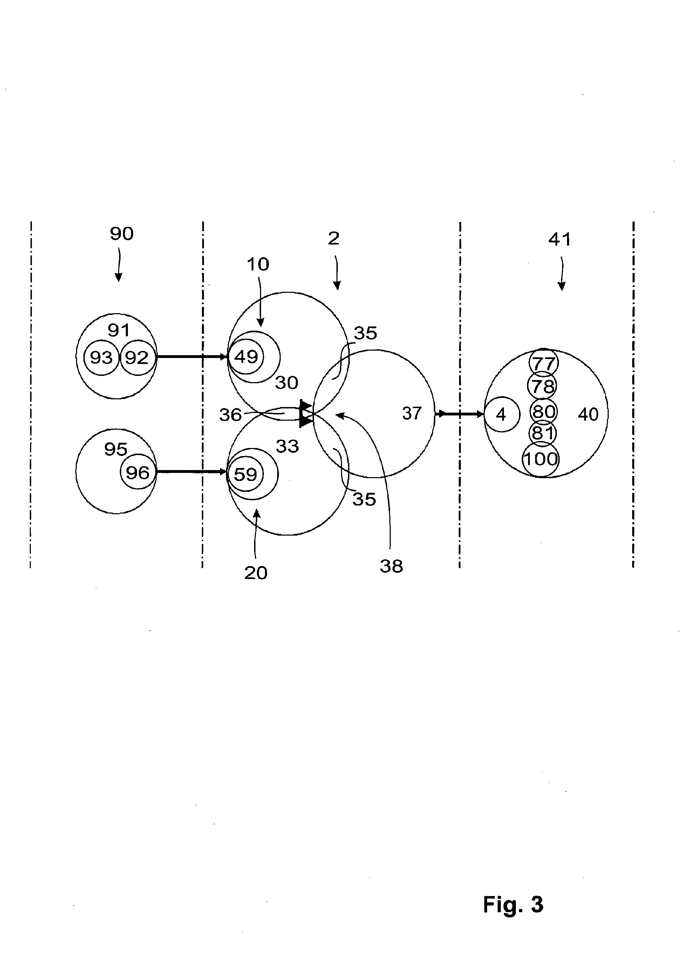

The methods 1 and 101 for measuring a projectile 85 in figure 1 and figure 2, respectively, can be carried out in a hybrid sensor system 2 shown as a concept in figure 3. The hybrid sensor system 2 comprises an acoustic sensor 49 as a part of an acoustic sub-system 10, which is connected to the acoustic data processing unit 30. The hybrid sensor system 2 further comprises a radar sensor 59 of the radar sub-system 20, which is connected to the radar data processing unit 33. Further computer hardware 37, which handles data transfer and data processing of output data, is connected to the acoustic data processing unit 30 and the radar data processing unit 33. The computer hardware 37 can also be described as a data processing unit. The connection of units 30, 33 and 37 forms a data fusion system 38, in which hybrid process fusion 35 and hybrid pre-fusion 36 is carried out. Hybrid pre-fusion 36 is particularly fast with a bi-directional data transfer connection between the acoustic data processing unit 30 and the radar data processing unit 33. Therefore, data from hybrid pre-fusion 36 can be used to control measurements by the acoustic sensor 49 or by the radar sensor 59 or both. Hybrid process fusion 35 is also carried out as a final data processing step in the computer hardware 37 using bi-directional electronic interconnections to the acoustic data processing unit 30 and to the radar data processing unit 33.

The hybrid sensor system 2 performs a conveyance of electronic information like data as well as a processing of data. Input data by measurement are the detectable features 90. The acoustic wave 91 with the muzzle blast wave signal 92 and the shock wave signal 93 are received by the acoustic sensor 49. Other detectable features 90 are electromagnetic waves 95 with the radar echo 96, which is received by the radar sensor 59.

Output data from the hybrid sensor system 2 are provided to the operator interface system 41. The operator can control the data exchange with the hybrid sensor system 2 and determine the size of the unit network 40, in which the hybrid sensor system 2 participates. The operator interface system 41 includes a number of systems like a navigation system 77, a radio transceiver system 78, a first active response system 80, a second active response system 81 and a display 100. The radio transceiver system 78 comprises a transmitter and a receiver for data, preferably using radio frequencies for transmission. Such systems 77, 78, 80, 81, 100 are part of a unit network 40, which also includes other hybrid sensor systems like the second hybrid sensor system 4. Therefore, the data transfer between the operator interface system 41 and the computer hardware 37 is bi-directional. A part of this data transfer is carried out through electronic wiring, while another part of this data transfer is carried out via wireless data transfer connections. The hybrid sensor system 2 can interact with hybrid sensor systems 4 within the unit network 40. Such interaction works e.g. with data provided by a sub-system like an acoustic sub-system 10 or a radar sub-system 20 of a second hybrid senor system 4 to the hybrid sensor system 2 for data fusion 35, 36. The hybrid sensor system 2 produces data for the weapon position and the projectile trajectory as well as the speed and the calibre of the projectile for presentation to an operator (not shown).

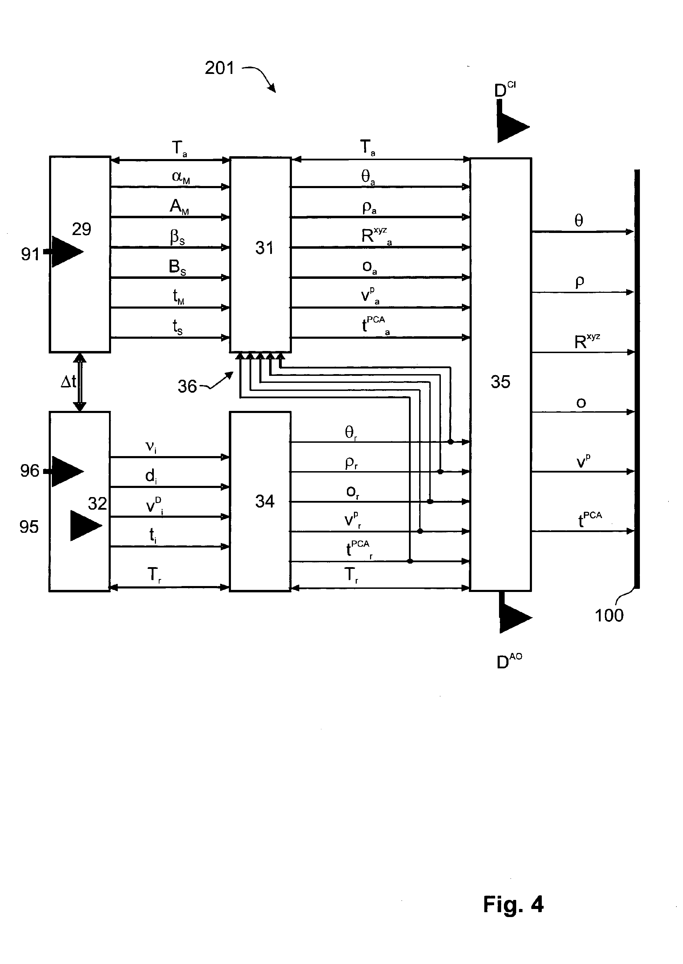

In the four figures, figure 4, 5, 6, and 7, aspects of the operation of the hybrid sensor system 2 of figure 3 are described. These figures are discussed together. Firstly, it shall be mentioned that in the case of deactivating one sub-system, like the acoustic sub-system 10 or the radar sub-system 20 of figure 3, no data fusion will be performed and the output information from the hybrid sensor system will only be based on the operative sub-system, unless data are provided from another system (not shown). Depending on the operating unit network, missing data for hybrid process fusion 35 or hybrid pre-fusion 36 can be provided as electronic data to the hybrid sensor system from a distant system. Reasons for deactivating one sub-system may also be due to a defect in one of the sub-systems. Another reason could be the deactivation of a sub-system on purpose, in particular by switching off the radar sensor in order to have a passive system only, which reduces the risk of being detected by opponents or simply to reduce the power consumption of a hybrid sensor system powered by a limited source of energy. Furthermore, it is also possible that a sub-system is operating free from defects but still unable to detect signals at a chosen position, even when it is set to maximum sensitivity.

Figure 4 shows a method 201 for detection and tracking of a flying projectile bidirectional on a time scale, which are different aspects of monitoring a projectile (not shown). A first case of hybrid process fusion 35 and hybrid pre-fusion 36 of data is explained. In figure 4, the radar sub-system 20 of figure 3 and the corresponding acoustic sub-system 10 of figure 3 are operating in a regular mode. Therefore, acoustic signal processing 29 of an acoustic wave 91 is carried out based on the schematic illustration of figure 2. Acoustic signal processing 29 of figure 4 extracts from the measured acoustic wave 91 a direction of a muzzle blast wave α_{M} and an amplitude of a muzzle blast wave A_{M}, as well as the time of muzzle blast wave detection t_{M}, provided that a muzzle blast wave is part of the acoustic wave 91. When the projectile (not shown) is flying faster than the velocity of sound c^{s}, the acoustic wave 91 also contains a shock wave signal (not shown), which is evaluated in terms of a direction of the shock wave βₛ, an amplitude of the shock wave Bₛ, and the time of the shock wave detection tₛ by acoustic signal processing 29. The acoustic data α_{M}, A_{M}, t_{M}, βₛ, Bₛ, tₛ, and additional control data Tₐ are transferred for further acoustic data processing 31 in particular to an acoustic data processing unit (not shown). The control data transfer Tₐ includes a control parameter which can be used to check the accuracy of the data transfer. Acoustic data processing 31 calculates from acoustic data α_{M}, A_{M}, t_{M}, βₛ, Bₛ, tₛ a number of acoustic projectile data like the trajectory angle θₐ, the miss distance ρₐ, i.e. the distance at the point of closest approach P^{CA}ₐ, the calibre of the projectile oₐ, and the velocity of the projectile v^{p}ₐ, where in particular the data θₐ, ρₐ, oₐ, v^{p}ₐ are provided for the moment in time, which is defined by the time stamp for the point of closest approach t^{PCA}ₐ of the projectile. In addition, the weapon position R^{xyz}ₐ is calculated by acoustic data processing 31. Moreover, data Tₐ are provided in addition, in order to facilitate further processing e.g. in other data processing units. The acoustic data Tₐ, θₐ, ρₐ, R^{xyz}ₐ, oₐ, v^{p}ₐ, and t^{PCA}ₐ enter the hybrid process fusion 35, which is controlled by command data-in D^{Cl}. Command data-in D^{Cl} include also sensitivity settings to be transferred as control data Tₐ to the acoustic sensor (not shown) and in particular to make adjustments of acoustic signal processing 29 and acoustic data processing 31 depending e.g. on decisions of the operator. A synchronisation Δt of time stamps between acoustic signal processing 29 and radar signal processing 32 is carried out, so that the data are calculated on a common time scale. Data are based to the same time standard by means of synchronisation Δt. A data reference for synchronisation Δt can be provided by control data transfer Tₐ for acoustic data or by control data transfer Tᵣ for radar data.

Radar signal processing 32 is initiated with the generation of an electromagnetic wave 95, which is sent out by the radar sub-system (not shown). A radar echo 96 returns from objects like a flying projectile. The radar echo 96 is processed by radar signal processing 32 generating a number of radar data referring to a number of positions of a flying projectile (not shown) in time, which is indicated by the index i. Radar echoes are evaluated for an i^{th} position of the projectile in terms of a direction of the i^{th} radar detection νᵢ, the distance for the i^{th} radar detection dᵢ, the Doppler velocity of the i^{th} radar detection v^{D}ᵢ and the time stamp of the i^{th} radar detection tᵢ for "i" being a natural number starting from 1. The Doppler velocity of the i^{th} detection v^{D}ᵢ is calculated as a difference between the frequency of the electromagnetic wave 95 sent out and the received radar echo 96 within the radar signal processing 32. Additional data, like control data Tᵣ enter the radar data processing 34 with the radar data vᵢ, dᵢ, v^{D}ᵢ, tᵢ.

Radar data vᵢ, dᵢ, v^{D}ᵢ, tᵢ, and further data transferred within the group of control data Tᵣ are transformed in radar data processing 34 in order to calculate radar data of the projectile like the trajectory angle θᵣ, the miss distance ρᵣ, i.e. the distance at the point of closest approach P^{CA}ᵣ, the calibre of the projectile oᵣ, the velocity of the projectile v^{p}ᵣ, and the time stamp for the point of closest approach t^{PCA}ᵣ. The radar data θᵣ, ρᵣ, Oᵣ, v^{p}ᵣ, t^{PCA}ᵣ enter directly into the hybrid fusion process 35. The radar data θᵣ, ρᵣ, oᵣ, v^{p}ᵣ, t^{PCA}ᵣ also enter into the acoustic data processing 31, where they are used to calculate acoustic data like θₐ, ρₐ, R^{XYZ}ₐ, oₐ, and v^{p}ₐ, thus improving the accuracy of before-mentioned acoustic data. This process is called hybrid pre-fusion 36, because it is carried out at an early stage of acoustic data processing 31. In hybrid pre-fusion 36, data from acoustic signal processing 29 are used and combined with radar data θᵣ, ρᵣ, oᵣ, v^{p}ᵣ, t^{PCA}ᵣ in order to generate acoustic data like θₐ, ρₐ, R^{XYZ}ₐ, oₐ, v^{p}ₐ, t^{PCA}ₐ entering hybrid process fusion 35. Radar data facilitate and improve the evaluation of acoustic data. In hybrid process fusion 35, acoustic data θₐ, ρₐ, R^{XYZ}ₐ, oₐ, v^{p}ₐ, t^{PCA}ₐ, and radar data θᵣ, ρᵣ, oᵣ, v^{p}ᵣ, t^{PCA}ᵣ are used to calculate final data obtained with the hybrid sensor system (not shown), which are then shown on a display 100. The presentation of the hybrid sensor fusion data, which include the trajectory angle θ, the miss distance ρ, i.e. the distance at the point of closest approach P^{CA}, the weapon position R^{XYZ}, the calibre of the projectile o, the velocity of the projectile v^{p}, and the time stamp for the point of closest approach t^{PCA}, is adjustable according to the wishes or requirements of the operator. Data like the before mentioned θ, ρ, R^{XYZ}, o, v^{p}, t^{PCA} can also be forwarded as action data-out D^{AO}. Action data-out D^{AO} are used e.g. as input parameters for any active response system or radio transceiver system or navigation system depending on the choice of the operator.

The hybrid pre-fusion 36 is based on the fact that a detection of the radar sub-system, in particular the radar echo 96 from a projectile occurs before the detection of the acoustic wave 91 containing the muzzle blast wave signal and the shock wave signal from the projectile. The information from a radar sensor (not shown) therefore can be used to increase the sensitivity of the acoustic sensor (not shown) by means of a transfer of control data Tₐ. Within the group of control data Tₐ, information about an expected distance ρᵣ or direction θᵣ of a projectile from radar data, like a minimum and a maximum range, can be used to increase the sensitivity or to adjust the orientation of the acoustic sensor (not shown). This increase of sensitivity can be achieved e.g. by applying a MUSIC algorithm or by orienting the acoustic sensor towards an expected direction of a muzzle blast wave signal or an expected direction of a shock wave signal e.g. by using an estimated bang point position. In this way, the detection range of the acoustic sub-system is increased by adaptive beam forming or by threshold adaption e.g. regarding the sensitivity threshold of the acoustic sensor (not shown). For this reason, the detection parameters from the radar sensor θᵣ, ρᵣ, oᵣ, v^{p}ᵣ, t^{PCA}ᵣ are processed either within acoustic data processing 31 or within acoustic signal processing 29 in order to determine the field of interest for acoustic detection. These parameters allow the calculation of detection sectors for the extrapolated point of origin of the muzzle blast wave and of the shock wave. The detection sectors in combination with the time stamp for the point of closest approach t^{PCA}ᵣ from the radar sensor translate first into a minimum and maximum distance interval and consequently into a time interval for an expected acoustic detection of the muzzle blast wave and of the shock wave, respectively.

Another example for hybrid process fusion 35 and hybrid pre-fusion 36 is the calculation of the weapon position R^{XYZ}. First, the projectile trajectory is derived from radar signal processing 32 and radar data processing 34. The projectile trajectory can be represented by a number of trajectory angles θᵣ and miss distances ρᵣ. The second step is the determination of the direction of a muzzle blast wave α_{M} from an acoustic wave 91. The difference between the time stamp for the point of closest approach t^{PCA}ᵣ by the radar sensor and the time stamp of the arrival time of the muzzle blast wave t_{M} is calculated applying hybrid pre-fusion 36 in acoustic data processing 31. The time stamp t^{PCA}ᵣ provides an accurate time marker due to the velocity of light of the electromagnetic wave from the radar echo 96. The time stamp t_{M} translates with the velocity of sound c^{s} into the distance between the acoustic sensor and the muzzle (not shown). In this calculation, also the velocity profile v^{p}ₐ, v^{p}ᵣ and the calibre of the projectile oₐ, oᵣ together with a geometric constellation between a projectile trajectory and the propagation line for the muzzle blast wave as shown for example in figure 2 is taken into consideration. Therefore, the process of hybrid pre-fusion 36 significantly improves the quality and accuracy of the weapon position R^{XYZ} that is calculated. There are also further advantages from hybrid process fusion 35, where for example the calibre of the projectile o is calculated taking the value for the calibre oᵣ determined with a radar sub-system and the value for the calibre oₐ determined with the acoustic sub-system into account. The methodical errors for determination of the values with different methods are taken into calculation e.g. as a weighting factor. Moreover, the determination of other data can be improved in a similar way. For example, the velocity of the projectile v^{p} can be improved in the hybrid fusion process 35 by considering the velocity of the projectile v^{p}ᵣ derived by the radar sub-system and the velocity of the projectile v^{p}ₐ obtained from the acoustic sub-system.

Further advantages are due to the reduction of the number of false alarms. The hybrid process fusion 35 provides a facility for checking the data in respect of coincidence of two independent detections for one single event. A false alarm rate (without reference sign) can be reduced based on hybrid process fusion 35 or hybrid pre-fusion 36, when there is obviously no correlation between the data like velocities v^{p}ᵣ and v^{p}ₐ or trajectory angle θᵣ and weapon position R^{XYZ}ₐ. Another advantage is the discrimination against other events like multiple or simultaneous shots with a hybrid sensor system using hybrid process fusion 35 and hybrid pre-fusion 36 by improving the association of shock waves and muzzle blast waves. The association can be improved in particular by using radar sensor data determined by radar signal processing 32 and radar data processing 34. Among the benefits of hybrid process fusion 35 and hybrid pre-fusion 36, the derivation of parameters that could not be derived solely by one sub-system and the improvement of the output parameters by weighting the sensor information under consideration of the individual sensor uncertainties can be emphasized.

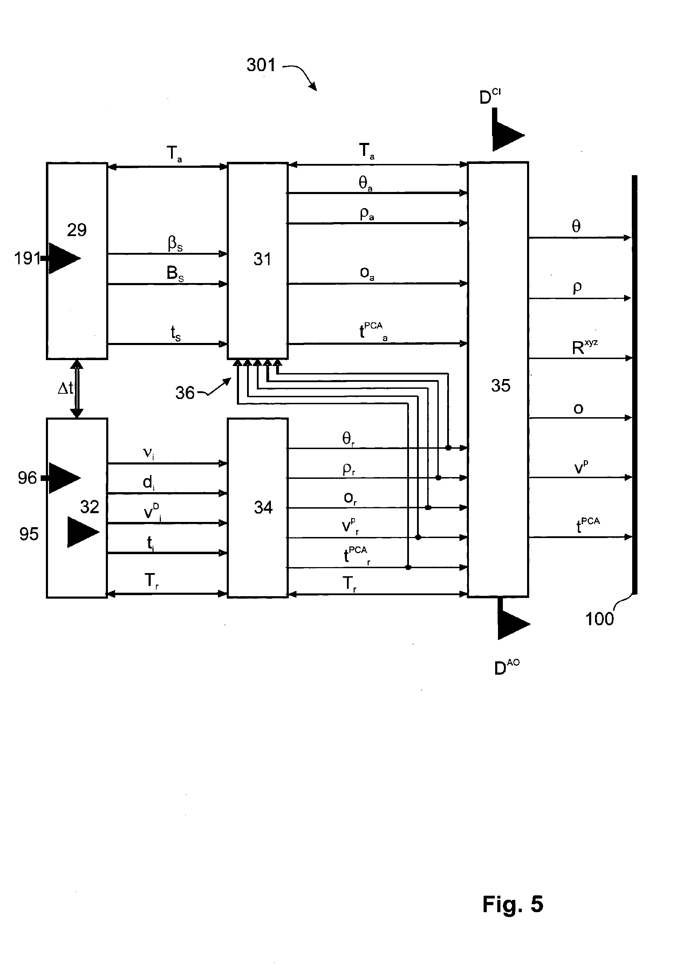

The full potential for the performance of a hybrid sensor system as shown in figure 3 can be better understood when special situations are analysed for data fusion as discussed in figure 4. Such examples of block diagrams are shown in figure 5, figure 6, and figure 7, which therefore are discussed together with figure 4.

In the method 301 of the diagram of figure 5, an acoustic signal 191 is treated by acoustic signal processing 29, where no signal from a muzzle blast wave, but a signal from a shock wave is found. As a consequence, only shock wave data of the projectile (not shown) like the time of the shock wave detection tₛ, the direction of the shock wave βₛ, and the amplitude of the shock wave Bₛ are extracted. The acoustic data tₛ, Bₛ, βₛ are available for acoustic data processing 31. Radar data from the radar echo 96 are obtained through radar signal processing 32 and radar data processing 34 as described in figure 4. Such data, like the radar trajectory angle θᵣ, the miss distance ρᵣ, the calibre of the projectile oᵣ, the velocity of the projectile v^{p}ᵣ, and the time stamp for the point of closest approach t^{PCA}ᵣ, are provided to the acoustic data processing 31 in hybrid pre-fusion 36. Using these data θᵣ, ρᵣ, oᵣ, v^{p}ᵣ, t^{PCA}ᵣ as well as the shock wave data βₛ, Bₛ, and tₛ, the acoustic data trajectory angle θₐ, the miss distance ρₐ, the calibre of the projectile oₐ, and the time stamp for the point of closest approach t^{PCA}ᵣ are calculated. The acoustic data θₐ, ρₐ, oₐ, t^{PCA}ₐ are provided by the acoustic branch of the hybrid sensor system for hybrid process fusion 35. In spite of the missing muzzle blast wave, the hybrid fusion process 35 can still combine data θₐ, ρₐ, oₐ, t^{PCA}ₐ from the acoustic branch and data θᵣ, ρᵣ, oᵣ, v^{p}ᵣ, t^{PCA}ᵣ from the radar branch for the calculation in particular of the velocity of the projectile v^{p} and the weapon position R^{XYZ}, which are not available in the acoustic branch due to the missing detection of a muzzle blast wave. The other fusion data on display 100 are the trajectory angle θ, the miss distance ρ, the calibre o, and the time for the closest approach t^{PCA}.

There are a number of reasons why an acoustic signal 191 may not contain a muzzle blast wave from a firing weapon (not shown). The distance between the weapon and the sensor may be too large. Furthermore, the detection range of the acoustic sub-system depends e.g. on weather conditions like storm and fallout from the atmosphere or on the terrain and the vegetation. The shooter may use a sound absorber or suppressor, which silences the firing sound from the weapon. The muzzle blast wave from the firing weapon may be super-imposed by surrounding noise e.g. due to the hybrid sensor system being mounted and deployed on a driving vehicle or due to noise from battlefield or other traffic. The muzzle blast wave may also be absorbed by an object in the path of wave propagation between the muzzle of the weapon and the acoustic sensor of the hybrid sensor system.

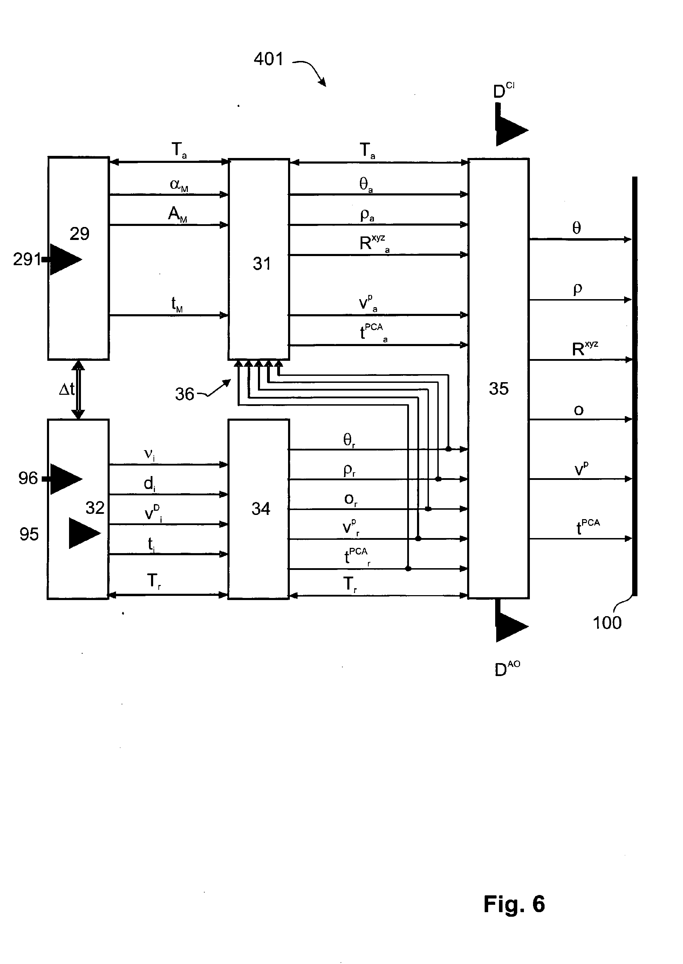

A data processing situation complementary to figure 5 is shown in figure 6. In this situation, also hybrid co-monitoring described with method 201 in figure 4 for a hybrid sensor system (not shown) using acoustic and radar monitoring of a projectile (not shown) is applied. In the monitoring method 401 of figure 6, the radar sub-system (not shown) detects and tracks the projectile (not shown) as described before, but the acoustic sub-system (not shown) detects the acoustic wave 291. The acoustic wave 291 is subject to acoustic signal processing 29, in which only a muzzle blast wave, but not a shock wave is identified. Therefore, the acoustic signal processing 29 first of all provides a direction of the muzzle blast wave α_{M} and an amplitude of the muzzle blast wave A_{M} together with the time of the muzzle blast wave detection t_{M} to the acoustic data processing 31. Other data from the radar branch calculated from a radar echo 96 are also provided to the acoustic data processing 31 for hybrid pre-fusion 36 of data. Radar data like the trajectory angle θᵣ, the miss distance ρᵣ, the calibre of the projectile oᵣ, the velocity of the projectile v^{p}ᵣ, and the time stamp for the projectile at the point of closest approach t^{PCA}, are used in the determination of acoustic data like a weapon position R^{XYZ}ₐ, and trajectory data from acoustic signals like the trajectory angle θₐ, the miss distance ρₐ, the velocity of the projectile v^{p}ₐ, and the time stamp for the projectile at the point of closest approach T^{PCA}ₐ. Since estimations of an acoustic calibre of the projectile based on a muzzle blast wave can be inaccurate, such calibre is not used for hybrid process fusion 35. The hybrid process fusion 35 provides the trajectory angle θ, the miss distance ρ, the weapon position R^{XYZ}, the calibre o, the velocity of the projectile v^{p} and the time of the moment of closest approach of the projectile t^{PCA}, which can be viewed by an operator on a display 100. Therefore, in spite of a fragmentary reception of signals, a full set of data θ, ρ, R^{XYZ}, o, v^{p}, t^{PCA}ᵣ identifying a flying projectile is obtained in the course of acoustic signal processing 29 and acoustic data processing 31 with radar signal processing 32 and radar data processing 34, in particular by using hybrid process fusion 35 and hybrid pre-fusion 36.

There are also a number of reasons why a shock wave from a projectile may not be detected within the acoustic signal 291 by the acoustic sub-system (not shown). The velocity of the projectile may be subsonic, e.g. due to the usage of subsonic ammunition or due to a high distance between the weapon and the hybrid sensor system (not shown), especially a distance to the acoustic sensor, which can cause a decrease in the projectile velocity by friction in air. Similar to the discussion in the context of figure 5, in the situation of figure 6 the acoustic noise around the acoustic sensor can be very loud e.g. because of combustion engines or explosions around the microphones of the hybrid sensor system. Furthermore, the shock wave can be absorbed or deflected by an object in the propagation path of the shock wave before it could reach the acoustic sensor.

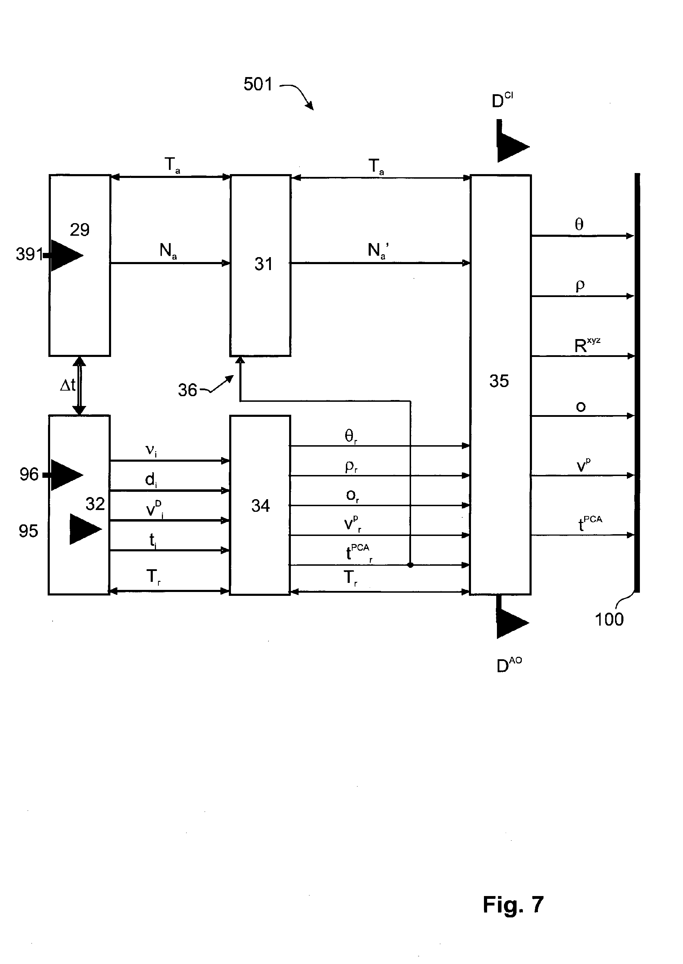

Another measurement situation based on method 201 described for figure 4 is shown in figure 7. In the monitoring method 501 of figure 7, the acoustic wave 391 detected by the hybrid sensor system (not shown) carries neither a detectable shock wave signal nor a detectable muzzle blast wave signal. The acoustic wave 391 contains sound from background noise, which varies in time. Possible reasons why neither shock wave nor muzzle blast wave are detectable in the acoustic wave 391 have been discussed in the context of figure 5 and figure 6. Still, the radar sub-system of the hybrid sensor system (not shown) can detect and track a projectile fired by a weapon. From the radar echo 96, radar signal processing 32 and radar data processing 34 can provide trajectory data as described in figure 4. In figure 7, the trajectory angle θᵣ, the miss distance ρᵣ, the calibre oᵣ, the velocity of the projectile v^{p}ᵣ, and the time of the moment of the closest approach for the projectile t^{PCA}ᵣ are calculated. In particular, the time of the closest approach of the projectile t^{PCA}ᵣ is used in hybrid pre-fusion 36 in order to analyse the noise from the acoustic wave 391 recorded in this moment T^{PCA}_{r.} The acoustic noise Nₐ of the acoustic wave 391 is characterised in terms of frequency and amplitude, in particular during acoustic signal processing 29. The determined noise level Nₐ' corresponding to the time t^{PCA}ᵣ that is obtained with acoustic data processing 31 can then be used to accept or reject the radar event in hybrid process fusion 35, before relevant data like trajectory angle θ, miss distance ρ, position of a weapon R^{XYZ}, calibre of the projectile o, velocity of the projectile v^{p}, and time stamp for the point of closest approach t^{PCA} are shown on display 100 or forwarded as action data-out D^{AO} to other systems (not shown). Once a noise level for a false event Nₐ' has been identified, such information can be provided to the radar signal processing in the form of a false alarm threshold within control data transfer Tᵣ. Measurement of the acoustic wave 391 is carried out continuously by the acoustic sub-system (not shown) and provided to the radar sub-system (not shown) for the purpose of false alarm threshold adjustment. In the case of a high acoustic noise level, the false alarm threshold is decreased, so that any true alarm is accepted. In the case of a low acoustic noise level, the false alarm threshold is increased so that the number of alarms that will be suppressed as false alarms will also be higher. By means of adjustment of false alarm thresholds in a continuous process, the performance of the monitoring system is improved.

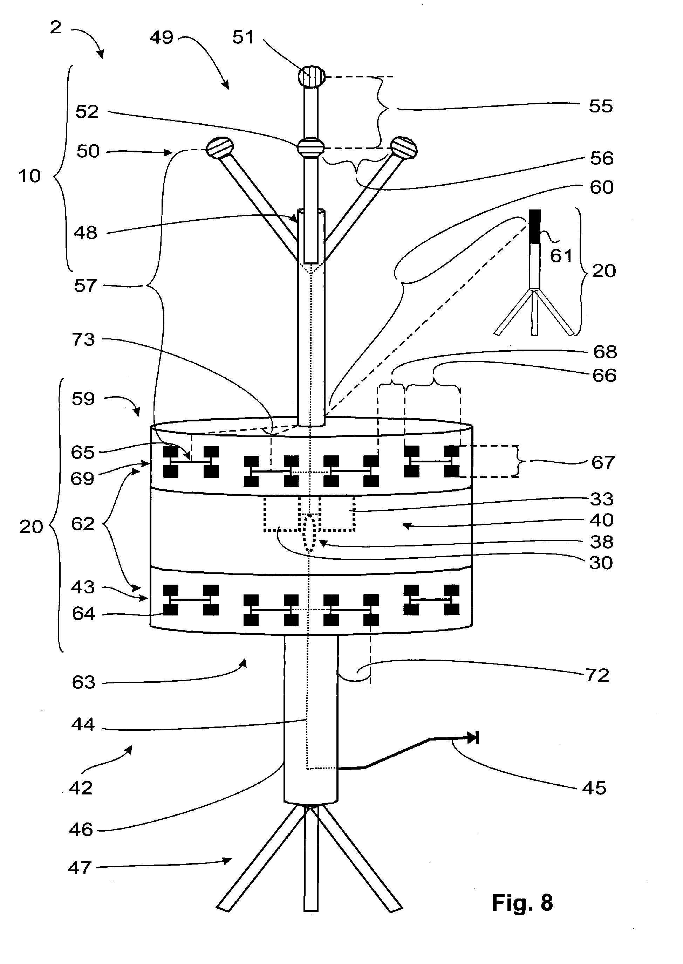

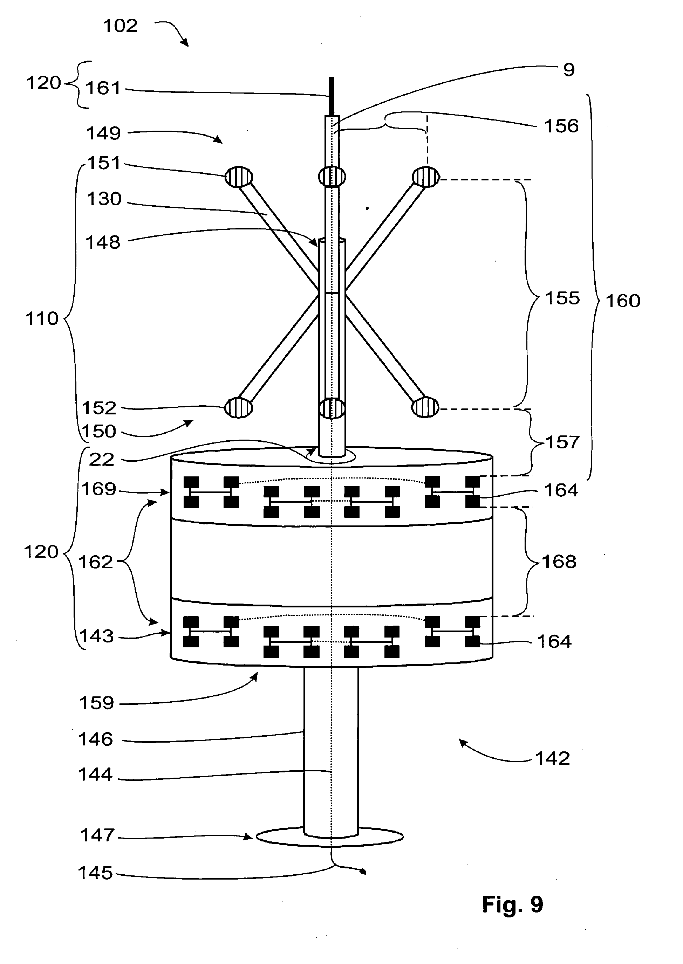

The achievement potential of the monitoring method according to figures 4 to 7 using a hybrid sensor system as described in figure 3 or in more detail in paragraphs further on with discussions of figure 8 or figure 9 for monitoring a flying projectile using hybrid process fusion 35 and hybrid pre-fusion 36 is substantial. This is by one aspect based on the combination of data from radar detection with data from shock wave and muzzle blast wave detection for the improvement of the output data or parameters and the weighting of the sensor information under consideration of the individual sensor uncertainties. There are additional benefits regarding parameters that could not be derived solely by one sub-system. This may be the case when a radar signal of a flying projectile is detected, but only one of the two acoustic signals, summarized as a muzzle blast wave or a shock wave, reaches the acoustic sensor. In addition, the adjustment of a false alarm threshold based on an acoustic noise level can improve the performance of radar signal detection. The performance of the radar sub-system can be improved by means of the adjustment of a detection threshold for false alarm suppression based on the processed acoustic signal as shown in figure 7, which may lead to the detection of a radar echo from a flying projectile.

The hybrid sensor system can also operate its sensing and processing strands separately so that information like the trajectory angle θ, the miss distance ρ, the weapon position R^{xyz}, the calibre of the projectile o, the velocity of the projectile v^{p}, and the time stamp for the point of closest approach t^{PCA} can be determined based on processes discussed with figure 4.

Nevertheless, other reasons for not detecting the projectile by the radar sub-system may be given. The miss distance between the radar sensor and the passing projectile may be too large. An object may be present between the passing projectile and the radar sensor shielding the radar sensor from the radar echo. Also technical problems of the radar sensor could be a reason for malfunctioning. In addition, the function of the radar sensor can be disturbed by some means of counteraction like stealth projectiles or a radar frequency jammer. A hybrid sensor system can provide projectile data even without a radar echo detection by exclusively using acoustic signals like the shock wave signal and the muzzle blast wave signal.

The first example of a hybrid sensor system introduced with a schematic diagram in figure 3 is discussed in-depth in figure 8. The hybrid sensor system 2 of figure 8 comprises the acoustic sub-system 10 and the radar sub-system 20. The radar sub-system 20 further comprises a radar sensor 59 (i.e. transmitter and receiver) as well as an optional radar transmitter 61, which can be placed at a radar sensor-transmitter distance 60 on a tripod (no reference sign). In order to improve the environmental coverage, a number of radar sensors 59 and radar transmitters 61 can be applied. Furthermore, a powerful radar sensor 59 and radar transmitter 61 are used for obtaining a higher distance resulting in an extended environmental coverage (not shown). The radar sensor 59 is mounted together with the acoustic sensor 49 of the acoustic sub-system 10 on a mast 46, which can be placed on the ground (not shown) with a mounting of the mast 47 in form of a tripod. This structure including the radar sensor 59 and the acoustic sensor 49 forms the sensor platform housing 42. The end of the mast 48 is carrying a group of microphones 50. The end of the mast 48 is a mobile section of the mast 46 that can rotate or tilt the microphones in a chosen direction like the direction of an expected muzzle blast wave. The acoustic sensor 49 can be further characterised by a distance 55 between the first microphone 51 and the second microphone 52. Another aspect of the geometry of the acoustic sensor is the position of microphones within the group of microphones 50, which is characterised by the distance 56. Therefore the distances 55, 56 and 57 are adjustable. The acoustic-radar sensor distance 57 is adjustable by means of a length (no reference sign) of the mast 46. By increasing the distances 55, 56 between the microphones, the resolving power of the acoustic sensor 49, in particular regarding the resolution of a dihedral or spatial angle can be improved or adjusted to an optimum in view of the requirements of the measurement situation.

The cylindrical housing of the sensor platform 42 carries a radar transceiver system 62, which is further structured by a first ring with antenna elements 43 located close to the mounting 47 of the mast 46 and a second ring with antenna elements 69 located closer to the end of the mast 48. The rings with antenna elements 43, 69 define an antenna position 65 of antenna elements like the antenna element 64, a basic antenna unit, within the antenna array 63. The first ring with antenna elements 43 and the second ring with antenna elements 69 form two levels of antenna elements, being preferably parallel to each other with a pre-set distance in between (no reference sign). The radar transceiver system 62 also includes electromagnetic signal transducers and amplifiers (not shown) for each ring with antenna elements 43, 69, which are in particular connected to each antenna element like the antenna element 64. The antenna elements like the antenna element 64 have the antenna height 67 and the antenna width 66, which are dimensions chosen for the detection of a specific range of radar wave length.

The antenna array 63 of the hybrid sensor system 2 is build with a single type of antenna elements like the antenna element 64. Other categories of hybrid sensor systems use antenna arrays consisting of two types, three types, or a higher number of types of antenna elements, which have different dimensions for the detection of a different range of wave length within each group of antenna elements. For this design (not shown), the detection power, in particular for distinguishing different moving objects based on different sizes and materials of the objects, can be varied. A decision whether a moving object is a projectile or not is made with certainty.

In the design of the hybrid sensor system 2 of figure 8, the antenna inter-distance 68 determines the number of antenna elements of the first ring with antenna elements 43 and the second ring with antenna elements 69. By means of the antenna inter-distance 68, the position of each antenna element, like the position 65 within the second ring with antenna elements 69, is defined. By one aspect, the resolving power or resolution of the radar sensor 59 depends on the opening angle 73, which is defined by the position of two neighbouring antenna elements, like the position 65 in respect to the mast 46 of the hybrid sensor system 2, in particular referring to a centre axis (not shown) of the mast 46. By another aspect, the resolution of the radar sensor 59 depends on dimensions 66, 67 and distances 68 of antenna elements. By yet another aspect, in particular referring to transversal polarization of electromagnetic radar radiation, the resolution of the radar sensor 59 is improved by alignment of an angular orientation 72 of antenna elements like the antenna element 64.

Inside the sensor platform housing 42, in particular inside the mast 46, runs the electronic interconnection 44 for sensors and other electronic components (not shown) indicated with a dotted line. The electronic interconnection 44 collects the signals in electronic form from the microphones 51, 52, 50 of the acoustic sensor 49 and guides the transformed acoustic signals (not shown) through a number of conductors or isolated cables. In this way, the signals or data are transferred to the acoustic data processing unit 30, located inside the sensor platform housing 42 as indicated with a dotted square. Signals received by the antenna elements, like the antenna element 64, are also guided with electronic interconnections like the electronic interconnection 44 to the radar data processing unit 33. The radar data processing unit 33 is as well located inside the sensor platform housing 42. The electronic interconnection 44 is also used to send controlled data to the acoustic sensor 49 e.g. for adjustments of distances 55, 56 or to the radar sensor 59 for controlling the antenna array 63, in particular for adjustments of an angular orientation 72 of antenna elements. Inside the sensor platform housing 42 between the acoustic data processing unit 30 and the radar data processing unit 33 is also the computer hardware of the data fusion system 38 that facilitates data exchange between the acoustic data processing unit 30 and the radar data processing unit 33 and handles the preparation of output data. In this way, a unit network 40 of data processing units is formed, which is also connected with the radar transmitter, e.g. using a wireless data transceiver system for long distances or a cable for short distances 60. The unit network 40 can be extended to other data processing units. Output data are sent within the hybrid sensor system 2 through the electronic interconnection 44 into the plug-in cable 45 leading from the hybrid sensor system 2 to other systems like the display (not shown). The plug-in cable 45 includes a number of isolated wires. Two of these wires are used to supply the electric power for driving the sub-systems and data processing units of the hybrid sensor system. Similar connections of the radar transmitter 61 are not shown.

A second version of a hybrid sensor system 102 is shown in figure 9. The hybrid sensor system 102 can be very compact so that it can be mounted as a single unit on a vehicle (not shown). The structure of the hybrid sensor system 102 with the sensor platform housing 142 is built with cylindrical symmetry around the central axis 9 indicated as a dotted line. Along the central axis 9 runs an electronic interconnection 144 data on bidirectional leads connecting the acoustic sub-system 110 and the radar sub-system 120 with the corresponding sensors like the acoustic sensor 149 and the radar sensor 159 with other systems in the vehicle, which can be connected with the plug-in cable 145 to the hybrid sensor system 102.

The mast 146 of the hybrid sensor system 102 is mounted with the base plate mounting of the mast 147 on the roof of a vehicle (not shown) for a good general survey and circumspection when monitoring the surroundings. The acoustic sensor 149 is mounted on the mast 146, especially at the end of the mast 148 between the radar transmitter 161 on top and the radar sensor 159 of the radar sub-system 120. In this configuration, the distance between the radar transmitter 161 and the radar sensor 159, namely the radar sensor-transmitter distance 160 is typically fixed. However, the radar sensor-transmitter distance 160 can also be increased or decreased by means of a telescope. This telescope (not shown) within the end of the mast 148 moves the radar transmitter 161 away from the radar sensor 159 when required by the terrain or special obstacles for electromagnetic radiation causing disturbances, e.g. by interference of waves. In order to avoid such problems, also the antenna inter-distance 168 between a first ring with antenna elements 143 and a second ring with antenna elements 169 can be adjusted. The rings of antenna elements 143, 169 form the radar transceiver system 162 including some hardware for processing radar signals inside the sensor platform housing 142, such hardware not being shown. The radar sensor 159 with the antenna elements 164 can be rotated around the central axis 9 thus determining a radar sub-system orientation 22, in particular in respect to the position of the acoustic sensor 149. In one mode of operation, the first ring of antenna elements 143 and the second ring of antenna elements 169 are rotated against each other thus increasing the resolution in particular in azimuthal direction. Depending on the radar sub-system orientation 22, the antenna elements 164 may face a different direction after a given interval of time, in particular in respect to the mounting of the mast 147 attached to a vehicle (not shown).

Further adjustments of the hybrid sensor system 102 can be made regarding the acoustic sub-system 110, in particular with the microphone group 150 of in total six or less or more microphones mounted at the end of the mast 148. The microphones like the first microphone 151 and the second microphone 152 are mounted on an acoustic data processing unit, like the acoustic data processing unit 130, which also forms a spacer between the microphones 151, 152 and the mast 146. Two or less or more microphones are associated in the microphone group 150 with the first microphone 151 and two or less or more microphones are associated with the second microphone 152, the two sub-groups being separated by a distance 155. The distance 156 of the microphones within a sub-group is adjustable in order to optimize the acoustic sensor 149 for detection with a good resolution either in direction of an azimuth angle or in direction of an elevation angle depending on the requirements of the terrain and the situation on the battlefield. For example, the resolution of a signal from a direction with an elevation angle can be improved by increasing the distance 155 of the two sub-groups of microphones, referring to the first microphone 151 and the second microphone 152 to its maximum. Such an adjustment may also alter the distance between the acoustic sensor 149 and the radar sensor 159, such distance being named the acoustic-radar sensor distance 157. In a simplified version of this hybrid sensor system 102, all distances 155, 156, 157, 160, 168 are fixed which has the advantage of being particularly robust under difficult environmental conditions like a sand storm.

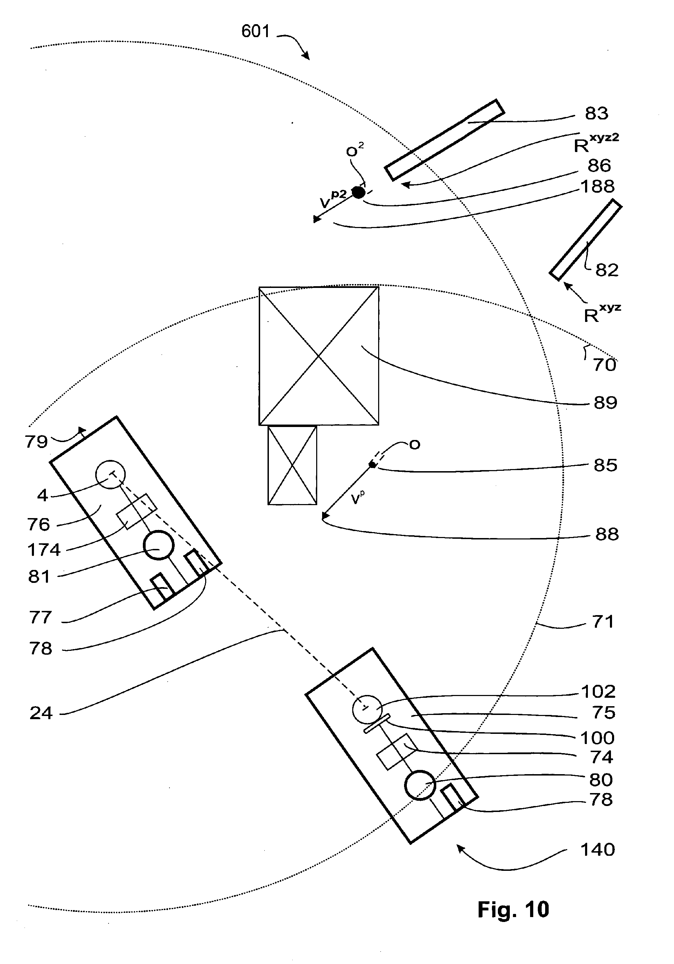

A schematic top view of a battle scene is shown in figure 10. In the battle scene, the monitoring method 601 is used, which combines a first hybrid sensor system 102 and a second hybrid sensor system 4 for monitoring flying projectiles like a first projectile 85 and a second projectile 86. In addition, monitoring methods 1, 101, 201, 301, 401 and 501 described for the figures 1, 2, 4, 5, 6, 7, respectively, are applicable in this situation, e.g. before an acoustic signal (not shown) like a muzzle blast wave or a shock wave can be detected. The scene involves a first vehicle 75 and a second vehicle 76, both vehicles being attacked by a first weapon 82 and a second weapon 83. The first weapon is located in the position R^{XYZ}, from where it fires the projectile 85 with the velocity v^{p} and the calibre o in the flight direction 88. The second weapon 83 is placed in the location R^{XYZ2}, from where it fires a projectile 86 with a calibre o² having a velocity of v^{p2} in a flight direction 188. The first vehicle 75 is equipped with the hybrid sensor system 102 and the second vehicle 76 with a second hybrid sensor system 4. In addition, the first vehicle 75 carries a first active response system 80 and the second vehicle 76 carries a second active response system 81. The vehicles 75, 76 are further equipped with a radio transceiver system 78 for data exchange between the vehicles. Other equipment comprises a display 100 for monitoring data in the vehicle 75 and a navigation system 77 on the vehicle 76. In this situation, the first vehicle 75 may have a passenger as an operator (not shown), who may drive the second vehicle 76 by remote control. The first hybrid sensor system 102 has a radar field of view 70, whereas the second hybrid sensor system 4 has a radar field of view 71. Both hybrid sensor systems 102, 4 participate in a unit network 140.

The situation poses at least two obvious problems for monitoring a flying projectile, which can be overcome using the hybrid sensor systems 102, 4 especially in communication with each other over the radio transceiver system 78 within the unit network 140. A first problem is due to the fact that a first weapon 82 and a second weapon 83 are fired almost simultaneously. A second problem is due to the fact that the second weapon 83 and the second projectile 86 are outside of the radar field of view 70 from the first vehicle 75. Therefore, the hybrid sensor system 102 can only detect an acoustic wave from the second projectile 86, in particular from firing the weapon 83, as well as an acoustic wave from the first projectile 85, in particular from firing the weapon 82, and radar echoes from the first projectile 85, whereas the second hybrid sensor system 4 can detect both projectiles 85, 86 by means of radar echoes. The muzzle of weapon 83 and the second projectile 86 are hidden behind an obstruction 89 so that a muzzle blast wave signal from the weapon 83 cannot be sensed with the second hybrid sensor system 4. Figure 10 also shows that the second hybrid sensor system 4 can not detect the muzzle blast wave signal from the weapon 82. However, the muzzle blast waves associated with projectile 85 and with projectile 86 can be detected with the first hybrid sensor system 102. Considering the relative velocity between the vehicle velocity 79 and the projectile velocity v^{p2}, there is a chance for an impact of projectile 86 in the second vehicle 76.

The second weapon 83 is inside the second radar field of view 71 of the second hybrid sensor system 4, so that the second projectile 86 can be monitored with the radar sensor of the second hybrid sensor system 4 at least starting from the moment when radar signals are not shielded by the obstruction 89 anymore. The second projectile 86 could be monitored with a second hybrid sensor system 4 also by its shock wave signal assuming that the second projectile 86 misses the second vehicle 76.

Using the data exchange between the hybrid sensor systems 102, 4 of the vehicles 75, 76, a most accurate calculation of the position of the second weapon R^{XYZ2} can be carried out using the detection of the muzzle blast wave signal from the second projectile 86 of the first hybrid sensor system 102 and the radar detection of the second projectile 86 by the second hybrid sensor system 4. By sending out a remote controlled vehicle 76 into the danger zone of the first weapon 82 and second weapon 83, a most accurate monitoring can be achieved from the safe distance 24 of the operator (not shown) in the first vehicle 75 behind the advancing second vehicle 76. Furthermore, decisions can be made about the most appropriate or most effective use of the active response systems 80, 81, as well as about the velocity 79 of the second vehicle 76, which may be driven by an electric motor connected to cartwheels (not shown) using the power provided by the electric power supply 174, which may include a fuel cell. In the case of the first vehicle 75, the electric power supply 74 is a battery, which is used to supply the hybrid sensor system 102 with electricity, whereas the vehicle 75 is mobile with a combustion motor (not shown).

Different process features and design features described for hybrid sensor systems and aspects of their applications e.g. in vehicles can be combined within the scope of this invention. In additional arrangements the inventive ideas described here are extendable to their implicitly anticipated full potential and use for monitoring a flying projectile.

**Reference signs**

| | |
|---|---|
| 1, 101, 201, 301, 401, 501, 601 | Method for monitoring |
| 2, 102 | Hybrid sensor system |
| 4 | Second hybrid sensor system |
| 9 | Central axis |
| 10, 110 | Acoustic sub-system |
| 20, 120 | Radar sub-system |
| 22 | Radar sub-system orientation |
| 24 | Sub-system distance |
| 29 | Acoustic signal processing |
| 30, 130 | Acoustic data processing unit |
| 31 | Acoustic data processing |
| 32 | Radar signal processing |
| 33 | Radar data processing unit |
| 34 | Radar data processing |
| 35 | Hybrid process fusion |
| 36 | Hybrid pre-fusion |
| 37 | Computer hardware |
| 38 | Data fusion system |
| 40, 140 | Unit network |
| 41 | Operator interface system |
| 42, 142 | Sensor platform housing |
| 43, 143 | First ring with antenna elements |
| 44, 144 | Electronic interconnection |
| 45, 145 | Plug-in cable |
| 46, 146 | Mast |
| 47, 147 | Mounting of the mast |
| 48, 148 | End segment of the mast |
| 49, 149 | Acoustic sensor |
| 50, 150 | Microphone group |
| 51, 151 | First microphone |
| 52, 152 | Second microphone |
| 55, 155 | Microphone distance |
| 56, 156 | Microphone distance |
| 57, 157 | Acoustic-radar sensor distance |
| 59, 159 | Radar sensor |
| 60, 160 | Radar sensor-transmitter distance |
| 61, 161 | Radar transmitter |
| 62, 162 | Radar transceiver system, especially antenna |
| 63 | Antenna array |
| 64, 164 | Antenna element |
| 65 | Antenna element position |
| 66 | Antenna element width |
| 67 | Antenna element height |
| 68, 168 | Antenna element inter-distance |
| 69, 169 | Second ring with antenna elements |
| 70 | First radar field of view |
| 71 | Second radar field of view |
| 72 | Angular orientation |
| 73 | Opening angle |
| 74, 174 | Electric power supply |
| 75 | First vehicle |
| 76 | Second vehicle |
| 77 | Navigation system |
| 78 | Radio transceiver system |
| 79 | Vehicle velocity |
| 80 | First active response system |
| 81 | Second active response system |
| 82 | First weapon |
| 83 | Second weapon |
| 84 | Muzzle |
| 85 | First projectile |
| 86 | Second projectile |
| 87 | Projectile trajectory |
| 88, 188 | Flight direction |
| 89 | Obstruction |
| | |
| 90 | Detectable features |
| 91, 191, 291, 391 | Acoustic wave, especially acoustic signal |
| 92 | Muzzle blast wave signal |
| 93 | Shock wave signal |
| 94, 194 | Wave front |
| 95 | Electromagnetic wave, especially electromagnetic energy |
| 96 | Radar echo, especially radar signal |
| 97 | First radar detection, especially first radar position |
| 98 | Second radar detection, especially second radar position |
| 99 | Radar detections, especially radar positions |
| 100 | Display |
| | |
| X, Y, Z | Coordinates |
| α_{M} | Direction of muzzle blast wave |
| A_{M} | Amplitude of muzzle blast wave |
| t_{M} | Time of muzzle blast wave detection |
| β_{S} | Direction of shock wave |
| B_{S} | Amplitude of shock wave |
| ts | Time of shock wave detection |
| ϕ | Mach angle |
| c^{s} | Velocity of sound |
| Nₐ, Nₐ' | Acoustic noise level, especially noise amplitude |
| νᵢ | Direction of i^{th} radar detection |
| dᵢ | Distance for i^{th} radar detection |
| v^{D}ᵢ | Doppler velocity of i^{th} radar detection |
| tⱼ | Time stamp of i^{th} radar detection |
| Δt | Synchronization, especially time stamp synchronization |
| θ, θₐ, θᵣ | Trajectory angle |
| ρ, ρₐ, ρᵣ | Miss distance, i.e. distance at the point of closest approach |
| R^{XYZ}, R^{XYZ}ₐ, R^{XYZ2} | Weapon position |
| d^{W} | Distance of the weapon |
| o, oₐ, oᵣ | Calibre of the projectile |
| o² | Calibre of the second projectile |
| v^{p}, v^{p}ₐ, v^{p}ᵣ | Velocity of the projectile |
| v^{p2} | Velocity of the second projectile |
| t^{PCA}, t^{PCA}ₐ, t^{PCA}ᵣ | Time stamp for the point of closest approach |
| P^{CA}, P^{CA}ₐ, P^{CA}ᵣ | Point of closest approach |
| Tₐ, Tᵣ | Control data transfer |
| D^{CI} | Command data-in |
| D^{AO} | Action data-out |

## Claims

1. A method (1, 101, 201, 301, 401, 501, 601) for monitoring a flying projectile (85, 86) utilizing at least two sub-systems (10, 20, 110, 120),
one sub-system being an acoustic sub-system (10, 110)
and one sub-system being a radar sub-system (20, 120),
and at least two data processing units (30, 130, 33, 37, 40, 41, 140),
an acoustic data processing unit (30, 130) capable of processing data (31) sensed by the acoustic sub-system (10, 110), all of them called acoustic signals (91, 191, 192, 291, 391, 92, 94; 93, 194), and
a radar data processing unit (33) capable of processing data (34) sensed by the radar sub-system (20, 120), all of them called radar signals (95, 96),
**characterized in that**
in the data processing units (30, 130, 33, 37, 40, 41, 140) at least two of the following data are processed:
an acoustic signal (91, 191, 192, 291, 391; 92, 94; 93, 194) representing a muzzle blast wave from a muzzle (84), named muzzle blast wave signal (92, 94),
an acoustic signal (91, 191, 192, 291, 391) representing a shock wave of a projectile (85, 86), named shock wave signal (93, 194), and
a radar signal (95, 96) representing at least two radar detections (97, 98, 99) by which a location of a firing weapon (82, 83, 84, R^{XYZ}, R^{XYZ}ₐ, R^{XYZ2}) of the projectile (85, 86) is retraced.

2. Method (1, 101, 201, 301, 401, 501, 601) for monitoring a flying projectile (85, 86) according to claim 1,
**characterized in that**
two of the acoustic signals (91, 191, 192, 291, 391; 92, 94; 93, 194; Nₐ) are transmitted to the acoustic data processing unit (30, 130) originating by a group (50, 150) of at least two acoustic microphones (50, 51, 52, 150, 151, 152),
which represent a sensor part (49, 149) of the acoustic sub-system (10, 110) and
which are located apart from each other by a predetermined distance (55, 56, 155, 156),
whereby in particular at least some of the microphones (50, 51, 52, 150, 151, 152) of the acoustic sub-system (10, 110) are maintained in positions of free view in a multitude of directions
so that a hybrid sensor system (2, 102, 4) is able to work at least multi-directional, preferably omni-directional.

3. Method (1, 101, 201, 301, 401, 501, 601) for monitoring a flying projectile (85, 86) according to claim 1 or 2,
**characterized in that**
a radar transceiver system (62, 162) detects an echo (96) from the projectile (85, 86), which represents a signal that is initiated by electromagnetic energy (95) sent by the radar transceiver system (62, 162) or by an optional transmitter (61, 161) towards the projectile (85, 86) and reflected from the projectile (85, 86) to the radar transceiver system (62, 162),
whereby consecutive reflecting positions (97, 98, 99) of the flying projectile (85) are observed and a projectile trajectory (87) is calculated from at least two and preferably a plurality of sequential detections of projectile positions (97, 98, 99) with the radar sub-system (20, 120) in predetermined increments of time.

4. Method (1, 101, 201, 301, 401, 501, 601) for monitoring a flying projectile (85, 86) according to any one of the previous claims 1 to 3,
**characterized in that**
data processing (29, 31, 32, 34, 35, 36), especially with data fusion (35, 36), of projectile (85, 86) monitoring data, like data from the acoustic sub-system (10, 110) and data from the radar sub-system (20, 120), is carried out in the acoustic sub-system (10, 110) and/or in the radar sub-system (20, 120) and/or in at least one of the data processing units (30, 130, 33, 37, 40, 41, 140).

5. Method (1, 101, 201, 301, 401, 501, 601) for monitoring a flying projectile (85, 86) according to any one of the previous claims 1 to 4,
**characterized in that**
each one of the at least two data processing units (30, 130, 33, 37, 40, 41) is usable to calculate a trajectory of the projectile (87), meanwhile at least one processing unit (30, 130, 33, 37, 40, 41, 140) is operating, especially by providing processing redundancy e.g. as safety back-up, in particular by carrying out bidirectional data transfer especially of measured detectable features (90), like data of the flying projectile (85, 86), within a unit network (40, 140).

6. Method (1, 101, 201, 301, 401, 501, 601) for monitoring a flying projectile (85, 86) according to any one of the previous claims 1 to 5,
**characterized in that**
acoustic signals (91, 191, 192, 291, 391; 92, 94; 93, 194; Nₐ) measured by the acoustic sub-system (10, 110) are evaluated, preferably therein, yielding from the acoustic sub-system (10, 110) at least one of the following acoustic data:
direction of a shock wave signal (β_{S}),
amplitude of the shock wave signal (B_{S}),
Fourier spectrum of the shock wave signal,
time of the shock wave signal detection (t_{S}),
direction of a muzzle blast wave signal (α_{M}) in two or three dimensions of a coordinate system (X, Y, Z),
amplitude of the muzzle blast wave signal (A_{M}),
Fourier spectrum of the muzzle blast wave signal,
time of the muzzle blast wave signal detection (t_{M})or
an acoustic noise amplitude (Nₐ).

7. Method (1, 101, 201, 301, 401, 501, 601) for monitoring a flying projectile (85, 86) according to claim 6,
**characterized in that**
acoustic data (91, 191, 192, 291, 391; 92, 94; 93, 194; Nₐ; β_{S}, B_{S}, t_{S}, α_{M}, A_{M}, t_{M}, Nₐ) from the acoustic sub-system (10, 110) are transferred to the acoustic data processing unit (30, 130),
and acoustic data (91, 191, 192, 291, 391; 92, 94; 93, 194; Nₐ; β_{S}, B_{S}, t_{S}, α_{M}, A_{M}, t_{M}, Nₐ) are further processed in the processing unit (30, 130, 33, 37, 40, 140) yielding at least one of the following data:
a trajectory angle (θ, θₐ),
a distance (ρ, ρₐ) from the acoustic sub-system (10, 110) to a point of closest approach (P^{CA}) of the projectile (85, 86),
a velocity of the projectile (v^{p}, v^{p}ₐ, v^{p2}),
a calibre of the projectile (o, oₐ, o²),
a weapon position (R^{XYZ}, R^{XYZ}ₐ, R^{XYZ2}),
an acoustic noise level (Nₐ').

8. Method (1, 101, 201, 301, 401, 501, 601) for monitoring a flying projectile (85, 86) according to any one of the previous claims 1 to 7,
**characterized in that**
radar signals (95, 96, 97, 98, 99), e.g. radar echoes (96), measured by the radar sub-system (20, 120) are evaluated, preferably therein, in predetermined increments of time, yielding from the radar sub-system (20, 120) for the first detection (97) of the flying projectile (85, 86) and the following detections (98, 99) repeated after an i^{th} increment of time, with i being a natural number 1 or 2 or preferably 3, or higher,
at least one data is of the following:
direction of an i^{th} radar detection (vᵢ),
distance for an i^{th} radar detection (dᵢ),
an i^{th} velocity vector of the projectile in two or three dimensions of a coordinate system,
especially an i^{th} Doppler velocity (v^{D}ᵢ), or
a time stamp of an i^{th} radar detection (tᵢ), or
in particular a radar cross-section.

9. Method (1, 101, 201, 301, 401, 501, 601) for monitoring a flying projectile (85, 86) according to any one of the previous claims 1 to 8,
**characterized in that**
projectile data (95, 96, 97, 98, 99; vᵢ, dᵢ, v^{D}ᵢ, tᵢ) from the radar sub-system (20, 120) are transferred to the radar data processing unit (33) and further processed in at least one of the data processing units (30, 130, 33, 37, 40, 140) yielding at least one of the following projectile (85, 86) data:
a trajectory angle (θ, θₐ, θᵣ),
a minimum distance or a point of closest approach (ρ, ρₐ, ρᵣ) to the radar sub-system (20, 120),
a calibre (o, oₐ, oᵣ, o²),
a velocity vector(v^{p}, v^{p}ₐ, v^{p}ᵣ, v^{p2}), or
a radar time stamp (t^{PCA}, t^{PCA}ₐ, t^{PCA}ᵣ) in particular for the point of closest approach (P^{CA}) of the projectile (85, 86) to the radar sub-system (20, 120).

10. Method (1, 101, 201, 301, 401, 501, 601) for monitoring a flying projectile (85, 86) according to any one of the previous claims 1 to 9,
**characterized in that**
an upper and/or a lower limit for a calibre (o, oₐ, oᵣ, o²) of the projectile (85, 86) is calculated from a muzzle blast wave signal (92, 94) measurement or from a shock wave signal (93, 194) measurement from the acoustic sub-system (10, 110), e.g. by calculated correlation with tabulated reference data, especially within at least one of the data processing units (30, 130, 33, 37, 40, 140), or from a radar cross-section determined from at least one radar echo (96) received by the radar sub-system (20, 120), in particular in the radar data processing unit (33).

11. Method (1, 101, 201, 301, 401, 501, 601) for monitoring a flying projectile (85, 86) according to any one of the previous claims 1 to 10,
**characterized in that**
a trajectory (87) of the flying projectile (85, 86) is calculated back in time and space to a position of a firing weapon (R^{XYZ}, R^{XYZ}ₐ, R^{XYZ2}) using at least one of the following data:
a velocity vector (v^{p}, v^{p}ₐ, v^{p}ᵣ, v^{p2}) of the flying projectile (85, 86), preferably in three dimensions,
a distance (ρ, ρₐ, ρᵣ) from at least one sub-system (10, 110; 20, 120) to a point of closest approach (P^{CA}) and a related time stamp (t^{PCA}, t^{PCA}ₐ, t^{PCA}ᵣ),
a trajectory angle (θ, θₐ, θᵣ),
a projectile calibre (o, oₐ, oᵣ, o²),
whereby the data (v^{p}, v^{p}ₐ, v^{p}ᵣ, v^{p2}, ρ, ρₐ, ρᵣ, t^{PCA}, t^{PCA}ₐ, t^{PCA}ᵣ, θ, θₐ, θᵣ, o, oₐ, oᵣ, o²) are obtained preferably by means of evaluation of measurements, from at least one sub-system (10, 110; 20, 120).

12. Method (1, 101, 201, 301, 401, 501, 601) for monitoring a flying projectile (85, 86) according to any one of the previous claims 1 to 11,
**characterized in that**
a first hybrid monitoring mode is used, comprising
providing data from the acoustic sub-system (10, 110) with a respective acoustic time stamp (t_{M}, t_{S}, t^{PCA}ₐ), and
providing data from the radar sub-system (20, 120) with a respective radar time stamp (tᵢ, t^{PCA}ᵣ),
combining acoustic data and radar data, especially data having time stamps (t_{M}, t_{S}, t^{PCA}ₐ, tᵢ, t^{PCA}ᵣ) within a predetermined time window, by calculation using data from a second sub-system (10, 110, 20, 120; 4, 2, 102) in order to improve single sub-system (20, 120, 10, 110, 2, 102, 4) monitoring precision,
using at least one of the following:
a calibre of the projectile (oₐ, oᵣ, o),
a projectile trajectory angle (θₐ, θᵣ, θ,),
a weapon position (R^{XYZ/2}, R^{XYZ}ₐ, R^{XYZ}),
a projectile velocity (v^{p}ₐ, v^{p}ᵣ, v^{p}) or a projectile position (97, 98, 99) and
time (tᵢ), in particular a distance (ρₐ, ρᵣ, ρ) and a time stamp (t^{PCA}ₐ, t^{PCA}ᵣ, t^{PCA}) for a point of closest approach (P^{CA}) of the projectile (85, 86), determined from a second sub-system (10, 110, 20, 120; 4, 2, 102), to calculate at least one of the following in a hybrid process fusion (35) of data:
a weapon position (R^{XYZ}),
a trajectory angle (θ) of the projectile (85, 86),
a distance (p) to a point of closest approach (P^{CA}) of the projectile,
a velocity of the projectile (v^{p}),
a calibre of the projectile (o) and
a time stamp of a point of closest approach of the projectile (t^{PCA}) from data of a first sub-system (20, 120, 10, 110, 2, 102, 4).

13. Method (1, 101, 201, 301, 401, 501, 601) for monitoring a flying projectile (85, 86) according to any one of the previous claims 1 to 12,
**characterized in that**
a second hybrid monitoring mode is carried out, especially in an iterative process, using data (95, 96, 97, 98, 99; vᵢ, dᵢ, v^{D}ᵢ, tᵢ; v^{p}ᵣ, v^{p}, ρᵣ, ρ, t^{PCA}ᵣ, t^{PCA}, θᵣ, θ, oᵣ, o) from subsequent measurements of the radar sub-system (20, 120) in order to control and analyze measurements of the acoustic sub-system (10, 110),
each one especially provided with a time stamp (tᵢ, t^{PCA}ᵣ, t^{PCA}) for hybrid pre-fusion (36) of data, using at least one of the following:
a direction of a radar detection (vᵢ),
a distance of a radar detection (dᵢ),
a Doppler velocity of a detection (v^{D}ᵢ),
a calibre of the projectile (oᵣ) and a time stamp of a detection (tᵢ), yielding at least one of the following:
a trajectory angle (θₐ),
a miss distance (ρᵣ),
a time stamp for a point of closest approach (tₐ),
a weapon position (R^{XYZ}ₐ),
a calibre of the projectile (oₐ),
a velocity of the projectile (v^{p}ₐ).

14. Method (1, 101, 201, 301, 401, 501, 601) for monitoring a flying projectile (85, 86) according to any one of the previous claims 1 to 13,
**characterized in that**
validation of acoustic monitoring events is carried out by identification of shock wave signal (93) sensing events with correlation of detections made by the radar sub-system (20, 120),
in particular **in that** the acoustic sub-system (10, 110) cancels acoustic shock wave signals (93) that are uncorrelated to an electromagnetic signal (95) especially within the field of view (70, 71) of the radar sub-system (20, 120).

15. Method (1, 101, 201, 301, 401, 501, 601) for monitoring a flying projectile (85, 86) according to any one of the previous claims 1 to 14,
**characterized in that**
validation of radar projectile monitoring events (97, 98, 99), in particular events provided with a radar time stamp (tᵢ, t^{PCA}ᵣ), is carried out by means of a radar signal threshold,
whereby false radar signals below the radar signal threshold are rejected and the radar signal threshold is calculated from an acoustic noise level (Nₐ, Nₐ') determined by the acoustic sub-system preferably at the moment of the radar time stamp (tᵢ, t^{PCA}ᵣ), and in particular a radar signal threshold is provided to the radar sub-system (20, 120) by the acoustic sub-system (10, 110) for adjustment of the radar signal threshold in the radar sub-system (20, 120),
whereby the radar signal threshold is decreased whenever the acoustic noise level is determined to be higher than a specified noise level and the radar signal threshold is increased whenever the acoustic noise level is lower than a specified noise level.

16. Method (1, 101, 201, 301, 401, 501, 601) for monitoring a flying projectile (85, 86) according to any one of the previous claims 1 to 15,
**characterized in that**
monitoring with the radar sub-system (20, 120) is carried out in three dimensions by controlling a power transmission of at least one antenna element (43, 143, 59, 159, 61, 161, 63, 64, 164, 68, 168, 69, 169), especially comprised by several antenna elements (64, 164), of which in particular each antenna element (64, 164) is controlled in terms of power transmission, and in particular an angle of radiation (72, 73) with each antenna element (64, 164).

17. Method (1, 101, 201, 301, 401, 501, 601) for monitoring a flying projectile (85, 86) according to any one of the previous claims 1 to 16,
**characterized in that**
an angular resolution of radar echo (96) monitoring a dihedral angle is controlled by means of a number of antenna elements (43, 143, 59, 159, 61, 161, 63, 64, 164, 68, 168, 69, 169), by a position (65) of at least a first antenna element (64, 164), preferably in a first ring with antenna elements (43, 143), and a second antenna element located in a second position preferably in at least a second ring with antenna elements (69, 169), and an inter-distance (24, 60, 160, 68, 168) or an opening angle (73) between at least said two antenna elements (43, 143, 59, 159, 61, 161, 63, 64, 164, 68, 168, 69, 169, 4, 102),
wherein especially the radar sub-system (20, 120) comprises a static antenna system with an adjustable array of antenna elements (43, 143, 63, 69, 169).

18. Method (1, 101, 201, 301, 401, 501, 601) for monitoring a flying projectile (85, 86) according to any one of the previous claims 16 to 17,
**characterized in that**
a number of the antenna elements (43, 143, 59, 159, 61, 161, 63, 64, 164, 68, 168, 69, 169, 2, 4, 102) is provided with electronic signals from a processing unit,
whereby a further group formed by antenna elements (43, 143, 59, 159, 61, 161, 63, 64, 164, 68, 168, 69, 169, 2, 4, 102) is controlled in particular to transmit electromagnetic amplitude and frequency (95), e.g. as continuous waves or in wave packets, with subsequent reception of echoes (96) from positions (97, 98, 99) by a number of antenna elements (43, 143, 59, 159, 61, 161, 63, 64, 164, 68, 168, 69, 169, 2, 4, 102), e.g. from a projectile (85, 86), for further processing in the radar sub-system (20, 120, 2, 102, 4) with pattern recognition, Doppler phase or Doppler frequency shift analysis, or filtering techniques, in order to identify moving objects within the field of view (70, 71) of the radar sub-system (20, 120, 2, 102, 4) in particular by the reflected energy and the velocity of the moving objects.

19. Method (1, 101, 201, 301, 401, 501, 601) for monitoring a flying projectile (85, 86) according to any one of the previous claims 1 to 18,
**characterized in that**
the flying projectile (85) and at least one second flying projectile (86) are monitored simultaneously and a location (R^{XYZ}) of the firing weapon (82) of the first flying projectile (85) and at least a location (R^{XYZ2}) of a second firing weapon (83) of the second flying projectile (86) is retraced using at least one sub-system(10, 110, 20, 120) of at least one monitoring system (2, 102, 4).

20. Method (1, 101, 201, 301, 401, 501, 601) for monitoring a flying projectile (85, 86) according to any one of the previous claims 1 to 19,
**characterized in that**
a system (102, 4) embedding the method for monitoring is moving with a velocity (79) relative to at least one firing weapon (82, 83), while monitoring at least one flying projectile (85, 86) fired from the at least one firing weapon (82, 83),
whereby especially a measured position (97, 98, 99) and a velocity vector (v^{p}ₐ, v^{p}ᵣ, v^{p}, v^{p2}) of the flying projectile (85, 86) and a projectile distance (dᵢ, ρₐ, ρᵣ, ρ) of closest approach to at least one sub-system (10, 110, 20, 120, 2, 102, 4) is corrected using a relative distance (24) or a velocity vector (79) of the sub-system (10, 110, 20, 120, 2, 102, 4), which is preferably determined using a navigation system (77, 20, 120, 2, 102, 4).

21. Hybrid sensor system (2, 102, 4) for monitoring a flying projectile (85, 86), in particular with a method (1, 101, 201, 301, 401, 501, 601) for monitoring the flying projectile (85, 86) according to any one of the previous claims 1 to 20, comprising
at least two sub-systems (10, 20, 110, 120),
an acoustic sub-system (10, 110) and
a radar sub-system (20, 120),
a radar data processing unit (33), capable of processing data sensed by the radar sub-system (20, 120),
and at least a second data processing unit (30, 130, 37, 38, 40, 140),
**characterized in that**
the radar sub-system (20, 120) comprises at least one transceiver antenna (62, 162, 63) comprising at least two antenna elements (43, 143, 59, 159, 63, 64, 164, 68, 168, 69, 169), and
the acoustic sub-system (10, 110) comprises at least two microphones (49, 149, 50, 150, 51, 151, 52, 152).

22. Hybrid sensor system (2, 102, 4) for monitoring a flying projectile (85, 86) according to claim 21,
**characterized in that**
the hybrid sensor system (2, 102, 4) comprises an acoustic data processing unit (30, 130, 40, 140) capable of processing data sensed by the acoustic sub-system (10, 110) and preferably electronic interconnection means (44, 144, 45, 145) of sub-systems (10, 110, 20, 120) and especially an interconnection (44, 144, 45, 145, 78) with at least one data processing unit (30, 130, 33, 37, 40, 140) for data exchange, e.g. bidirectional transfer by means of a data-bus system.

23. Hybrid sensor system (2, 102, 4) for monitoring a flying projectile (85, 86) according to any one of the claims 21 to 22,
**characterized in that**
the radar sub-system (20, 120) is equipped with at least two arrays of radar antenna elements (43, 143, 69, 169), which are placed on a circular section of a cylindrical surface of the sensor platform housing (42, 142), of which one array (43, 143) is positioned along a first ring located preferably coaxial on the housing surface nearer to the mounting of the mast (47, 147) carrying the housing (42, 142) and the second array (69, 169) is positioned on a level along a second ring, located, preferably coaxial, at the surface of the housing (42, 142) that is further away from the mounting of the mast (47, 147) than the first ring of radar antenna elements (43, 143).

24. Monitoring vehicle (75, 76) for monitoring a flying projectile (85, 86),
comprising a hybrid sensor system (2, 102, 4), by which the flying projectile (85, 86) is monitored, in particular according to one of the claims 21 to 23, especially using a monitoring method (1, 101, 201, 301, 401, 501, 601) according to any one of the claims 1 to 20, further comprising at least one motor and a data transceiver system (78, 61, 161, 62, 162) e.g. for transmission of radar data or acoustic data,
**characterized in that**
the monitoring vehicle (75, 76) further comprises
- an automatic operation system with computer hardware (37) connected to a transceiver system (78, 61, 161, 62, 162) for controlling or monitoring movements like the velocity (79) of the monitoring vehicle (75, 76) or the velocity of a projectile (v^{p}, v^{p2}),
- an electric power supply (74, 174), like an electric generator, a battery, or a fuel cell, powering the hybrid sensor system (2, 102, 4) especially through an electronic interconnection (44, 144, 45, 145) connecting also at least one additional device e.g. a human interface (100), an active response system (80, 81), a navigation system (77), a transceiver system (78, 61, 161, 62, 162) and / or a motor.
